# EUROPEAN PATENT SPECIFICATION

(11) **EP 4 425 412 B1**
(45) Date of publication and mention of the grant of the patent: **11.02.2026**
(21) Application number: 24160305.9
(22) Date of filing: 28.02.2024
(51) Int. Cl.: G06Q 30/018, G06Q 10/087, G06Q 50/04

(54) **INTEGRATED SAAS SYSTEM**
INTEGRIERTES SAAS-SYSTEM
SYSTÈME SAAS INTÉGRÉ

(30) Priority: 28.02.2023 CN 202310204521
(43) Date of publication of application: 04.09.2024
(73) Proprietor: Maxim Smart Manufacturing Co., Ltd, Jiaxing, Zhejiang 314117 (CN)
(72) Inventor: ZHAI, Shendao, Jiaxing City, Zhejiang Province, 314117 (CN)
(74) Representative: Santarelli

(56) References cited:
- US-A1- 2014 252 077
- US-A1- 2016 321 677
- US-A1- 2017 039 575

## Description

### Technical Field

The present invention belongs to the field of integration, in particular to an integrated Saas system.

### Background of the Invention

In the past, when a manager wants to hand over an item to other manufacturers for manufacturing, he/she often faces a problem that he/she cannot efficiently find a suitable manufacturer. At the same time, in order to prevent counterfeiting, anti-counterfeiting labels need to be manufactured so that consumers can check whether the item is genuine or not. However, in this way, labels also need to be handed over to special manufacturers for manufacturing. In general, the manager needs to spend a lot of manpower to manage the item manufacturers and the label manufacturers. After the labels are manufactured, the manufactured labels need to be handed over to the item manufacturers who then correspondingly place the labels on the items, and in this way, a lot of time is consumed, and the operation is costly and inefficient. Accordingly, the present invention provides an integrated Saas system, which saves a lot of manpower and reduces the time cost through integrated management and automatic matching of manufacturers.

US 2014/252077 A1 relates to anti-counterfeiting in a supply-chain.

### Summary of the Invention

An object of the present invention is to provide an integrated Saas system, in which a management unit is used as a data transfer station, a label unit is used to associate label information with order information to manufacture labels, a matching unit is used to further match the order information with a database to produce a suitable manufacturer, and the manufactured labels are handed over to the selected manufacturer together, thus greatly reducing the process of manufacturer selecting and label processing and improving the overall manufacturing efficiency.

In order to achieve the above object, the present invention provides an integrated Saas system, including:
a management unit, wherein a first client logs into the management unit to create and edit order information;
a label unit, in signal connection with the management unit, wherein the first client creates label information and associates the label information with the order information, the label unit embeds a corresponding label number into the label information according to the order information, and transmits the label information to a second client, so that the second client can manufacture a label according to the label information; and
a matching unit, in signal connection with the management unit, and used for receiving the order information and comparing the order information with a database to generate a matching result, wherein the first client selects a third client according to the matching result, and the matching unit transmits matching information to the third client; wherein
after the third client receives the matching information, and transmits order receiving information back to the management unit, the management unit transmits the order information and the label to the third client according to the order receiving information, so that the third client can manufacture an item according to the order information and correspondingly place the label on the item according to the order information.

Preferably, the database includes a plurality of manufacturer information, wherein the plurality of manufacturer information includes corresponding capital amount, manufacturing capacity, distance and evaluation.

Preferably, the order information includes an order number and demand information.

Preferably, the label unit includes a product display interface that displays or edits the label information.

Preferably, the label unit includes a traceability application interface that displays or edits a query page, wherein the query page provides sales information for querying the item.

Preferably, the management unit includes a permission module, wherein the first client sets first permission information in the permission module, and the management unit restricts the order information according to the first permission information, so as to edit or/and display a corresponding first portion of order information when the third client edits or/and queries the order information.

Preferably, the first client establishes a group in the management unit, and sets second permission information corresponding to the group in the permission module, and the management unit restricts the order information according to the second permission information, so as to edit or/and display a corresponding second portion of order information when the group edits or/and queries the order information, wherein the group includes at least one member.

Preferably, the first client inputs landing page information and a label type to create the label information.

Preferably, the label unit includes a verification module, wherein when a fourth client obtains the label information through the label and is linked to the verification module, the verification module performs verification according to the label information, and generates and outputs a verification result to the fourth client.

Preferably, the label unit includes an anti-counterfeiting application interface, wherein the anti-counterfeiting application interface displays or edits a verification page, and the verification page includes the verification result.

The present invention has the beneficial effects that the data of multiple clients are concentrated in the management unit, and the matching unit matches the appropriate manufacturers according to the order information, so as to provide the matching list and improve the efficiency of overall manufacturing management.

### Brief description of the Drawings

FIG. 1 is a schematic diagram of a system according to an embodiment of the present invention;
FIG. 2 is a schematic diagram of a role management process according to an embodiment of the present invention;
FIGS. 3A-3D are schematic diagrams of a member and department management process according to an embodiment of the present invention;
FIGS. 4A-4C are schematic diagrams of a related party management process according to an embodiment of the present invention;
FIGS. 5A-5C are schematic diagrams of a group management process according to an embodiment of the present invention;
FIG. 6 is a schematic diagram of a project visible management process according to an embodiment of the present invention;
FIGS. 7A-7E are schematic diagrams of a project permission association process according to an embodiment of the present invention;
FIG. 8 is a schematic diagram of a permission management process according to an embodiment of the present invention;
FIG. 9 is a schematic diagram of an association process according to an embodiment of the present invention;
FIGS. 10A-10C are schematic diagrams of a label information editing process according to an embodiment of the present invention;
FIGS. 11A-11D are schematic diagrams of a label information editing process according to an embodiment of the present invention;
FIGS. 12A-12C are schematic diagrams of a product display page making process according to an embodiment of the present invention;
FIGS. 13A-13C are schematic diagrams of a traceability application interface making process according to an embodiment of the present invention;
FIGS. 14A-14C are schematic diagrams of an anti-counterfeiting application interface making process according to an embodiment of the present invention;
FIGS. 15A-15D are schematic diagrams of a process of setting locked and unlocked states according to an embodiment of the present invention;
FIGS. 16A-16C are schematic diagrams of a process of operating an associated order according to an embodiment of the present invention;
FIGS. 17A-17G are schematic diagrams of a process of maintaining item number information according to an embodiment of the present invention;
FIGS. 18A-18C are schematic diagrams of a dynamic data maintenance process of a product display interface according to an embodiment of the present invention;
FIG. 19 is a schematic diagram of a language configuration process of a product display interface according to an embodiment of the present invention;
FIGS. 20A-20C are schematic diagrams of a process of configuring data of a source tracing site of a traceability application according to an embodiment of the present invention;
FIG. 21 is a schematic diagram of an anti-counterfeiting application configuration process according to an embodiment of the present invention;
FIGS. 22A-22B are schematic diagrams of a template library management process according to an embodiment of the present invention; and
FIG. 23 is a flowchart of an embodiment of the present invention.

### Detailed Description of Embodiments

In order to make the above and/or other objects, functions and features of the present invention more obvious and understandable, detailed description of preferred embodiments will be made below.

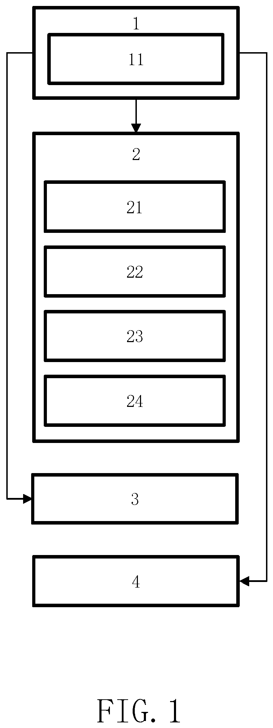

Referring to FIG. 1, which is a schematic diagram of a system according to an embodiment of the present invention. As shown in the figure, an integrated Saas system according to an embodiment of the present invention includes a management unit 1, a label unit 2, a matching unit 3 and a database 4, wherein the management unit 1 is in signal connection with the label unit 2, the matching unit 3 and the database 4, and the details are as follows.

In one embodiment, the management unit 1 creates and edits order information, wherein the order information includes an order number and demand information, and the demand information is for example a product table, product dynamic information, and a product quantity, but is not limited thereto.

Furthermore, the management unit 1 includes a permission module 11, a first client sets first permission information in the permission module 11, and the management unit 1 restricts the order information according to the first permission information, so as to edit or/and display a corresponding first portion of order information when the third client edits or/and queries the order information, that is, the first client can restrict the permission according to the content to be viewed by the third client, wherein the first client can be an order manager/department/member, but is not limited thereto.

Preferably, the first client establishes groups in the management unit 1, and the number of groups is not limited, and can be set according to different departments. In one embodiment, the first client will input information such as group name, group type, group administrator, group contact, contact type, contact information, email, and affiliated organization to establish different groups according to different stakeholders, and set the second permission information of the corresponding group in the permission module 11, for example, the responsible department has permission to edit and query all data, while the assisting stakeholder only has permission to query data, edit some data, etc., but is not limited thereto, so as to edit or/and display a corresponding second portion of order information when the group edits or/and queries the order information, wherein the group includes at least one member, that is, members in different groups can edit or query order information according to different permissions.

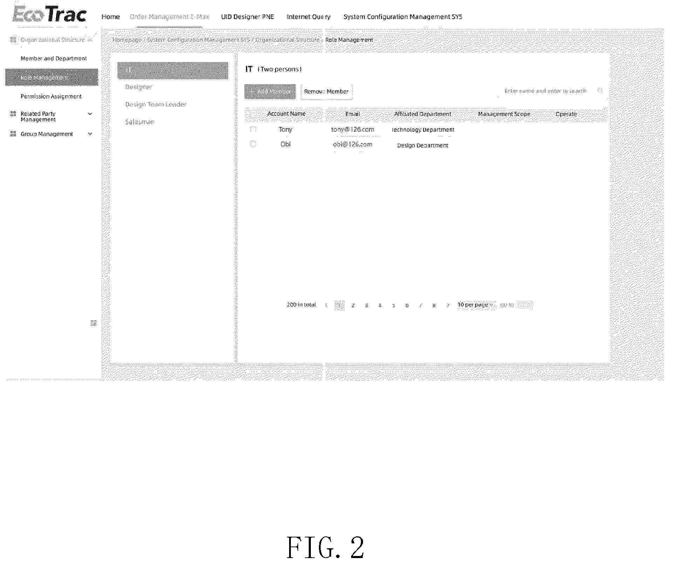

In one embodiment, referring to FIG. 2, which is a schematic diagram of a role management process according to an embodiment of the present invention. As shown in the figure, in the management unit 1, the first client clicks on System Configuration Management, then clicks on Role Management of Organizational Structure to display a Role Management page, then clicks on [Add Role] to create a new role, then clicks on [Add Member] to pop up a Member Selection box after selecting a role, and then clicks on Save. In another embodiment, it is also possible to perform member removal. The role management information is shown in Table 1.

**Table 1 Member management information**

| Column name | Data type | Whether null values are allowed | Default | Description |
|---|---|---|---|---|
| Account name | Character | No | | |
| Email | Character | No | | |
| Affiliated department | Character | No | | |

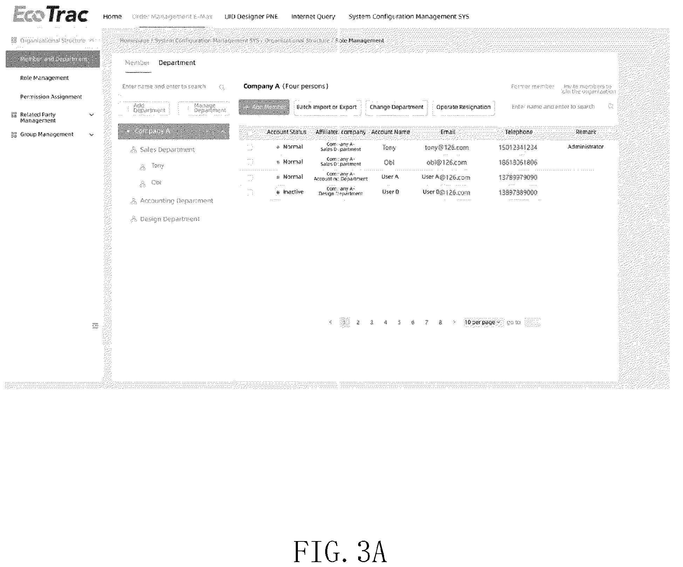

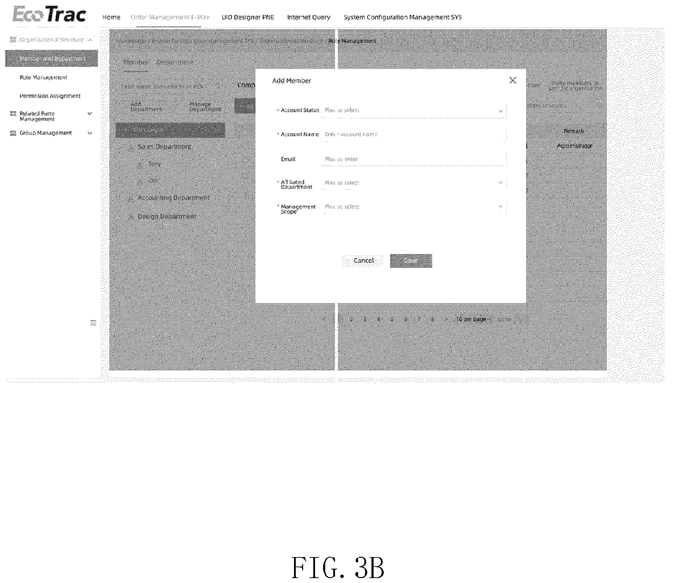

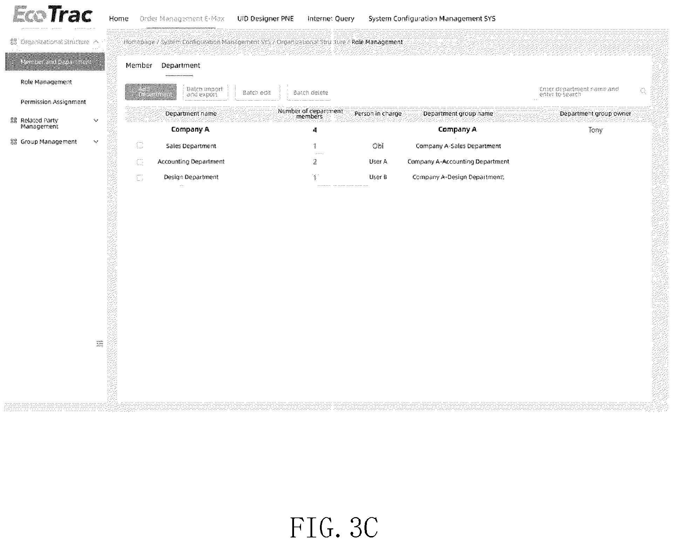

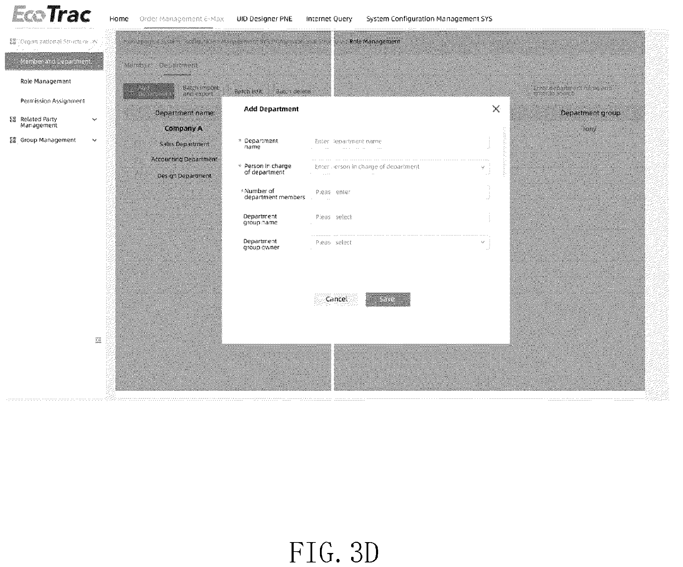

In one embodiment, referring to FIGS. 3A-3D, which are schematic diagrams of a member and department management process according to an embodiment of the present invention. As shown in the figure, in the management unit 1, the first client clicks on System Configuration Management, then clicks on Member and Department of Organizational Structure to display the content of Member/Department, clicks on [Add Member]/[Add Department] on the Member page to pop up an Add Member/Department box, inputs member related content/department information, and then clicks on Save. In another embodiment, it is also possible to perform batch import or export of members/departments, change of departments by members, resignation of members and editing of members/departments, wherein the department management information is shown in Table 2.

**Table 2 Department management information**

| Column name | Data type | Whether null values are allowed | Default | Description |
|---|---|---|---|---|
| Department/Company name | Character | No | | |
| Number of department members | Character | No | | |
| Person in charge | Character | No | | |
| Department group name | Character | Yes | | |
| Department group owner | Digital | Yes | | |

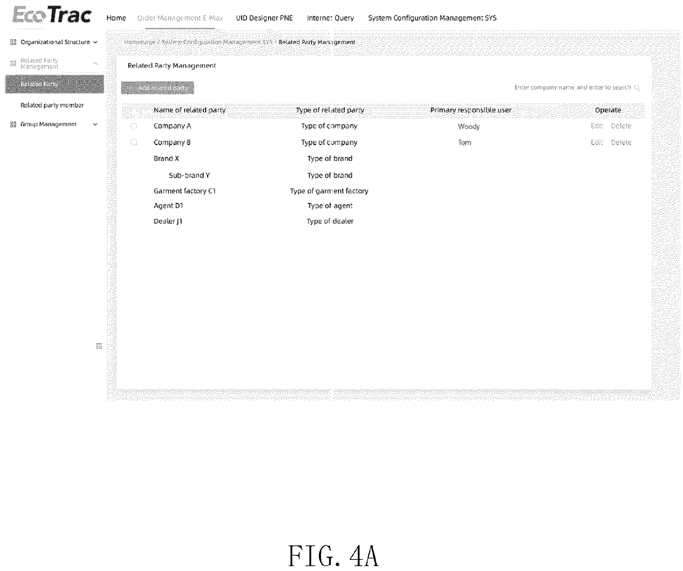

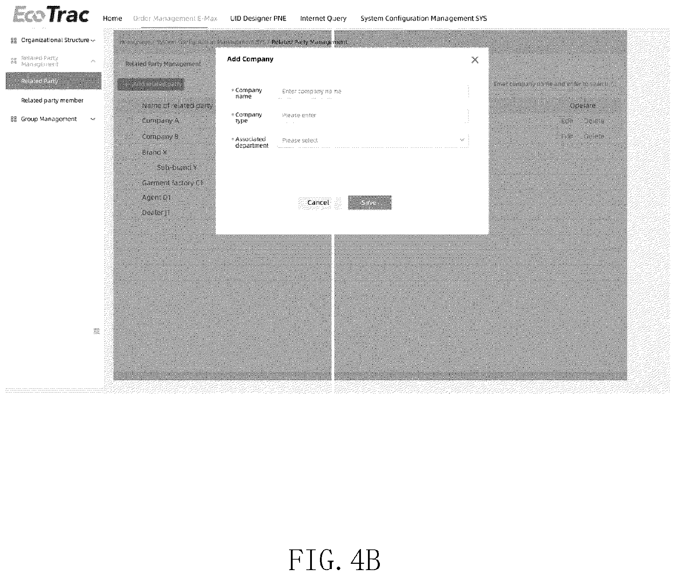

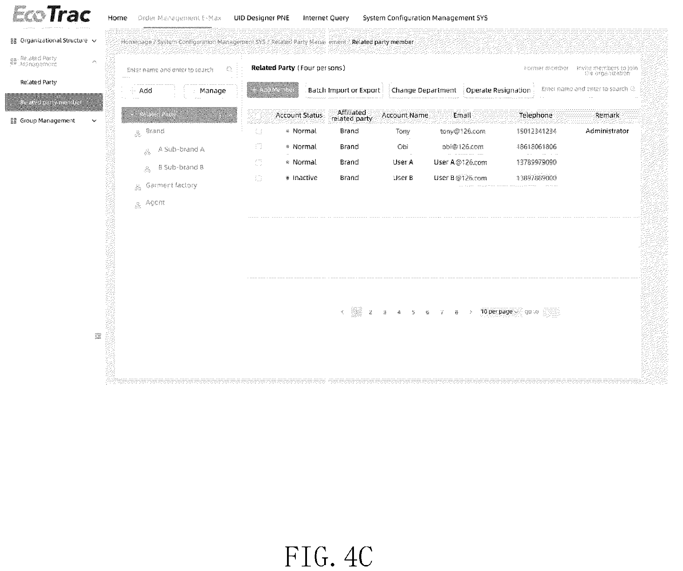

In one embodiment, referring to FIGS. 4A-4C, which are schematic diagrams of a related management process according to an embodiment of the present invention. As shown in the figure, the first client can decide the information to be viewed by the third client, and at the same time can also decide the members of the third client who can view the information. When the first client wants to create a member managing the third client, the first client can click on System Configuration Management in the management unit 1, then click on Related Party and Related Party Member of Related Party Management to display the content of Related Party/Related Party Member, clicks on [Add Member]/[Add Related Party] on the Member page to pop up an Add Related Party Member dialog box, input related party member information/related party information, and then click on Save. In another embodiment, it is further possible to perform batch import or export of related party members, change of related parties and editing of related party members, wherein the party management information is as shown in Table 3 and Table 4.

**Table 3 Related party management information**

| Column name | Data type | Whether null values are allowed | Default | Description |
|---|---|---|---|---|
| Name of related party | Character | No | | |
| Type of related party | Character | No | | |
| Primary responsible user | Character | No | | |

**Table 4 Related party member management information**

| Column name | Data type | Whether null values are allowed | Default | Description |
|---|---|---|---|---|
| Account status | Character | No | | |
| Affiliated related party | Character | No | | |
| Account name | Character | No | | |
| Email | Character | Yes | | |
| Telephone | Character | Yes | | |
| Remark | Character | Yes | | |

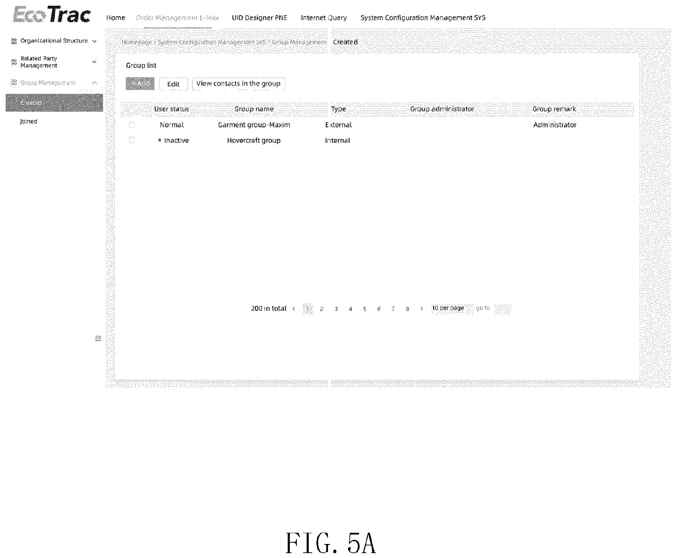

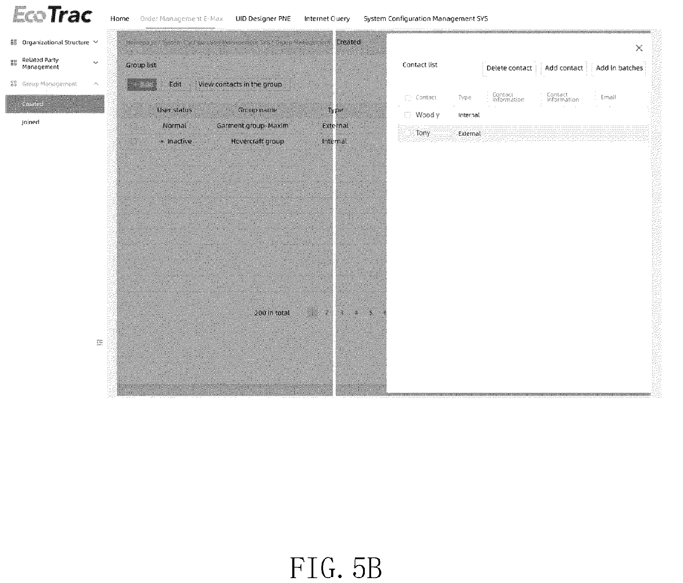

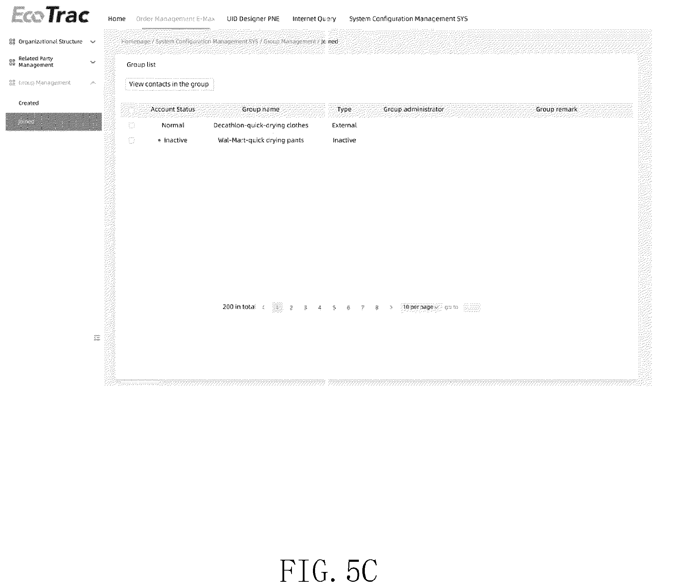

In one embodiment, referring to FIGS. 5A-5C, which are schematic diagrams of a group management process according to an embodiment of the present invention. As shown in the figure, when a user wants to create and manage a group or query a joined group, the user can click on System Configuration Management in the management unit 1, then click on Created within Group Management to display a list of created groups, and then click on the [Add] button to input the group information. When clicking on the [View Contacts in Group] button to pop up a contacts-in-group window, the user can click on [Add Contacts] to select the person who needs to be added to the group. The user clicks on Added Group within Group Management to display a list of added groups and related status. In another embodiment, it is also possible to edit the group, wherein the group management information is shown in Table 5 and Table 6.

**Table 5 Group management information**

| Column name | Data type | Whether null values are allowed | Default | Description |
|---|---|---|---|---|
| Account status | Character | No | | |
| Group name | Character | No | | |
| Type | Character | No | | |
| Group administrator | Character | No | | |
| Group remark | Character | No | | |

**Table 6 Group member management information**

| Column name | Data type | Whether null values are allowed | Default | Description |
|---|---|---|---|---|
| Contact | Character | No | | |
| Type | Character | No | | |
| Contact information | Character | No | | |
| Email | Character | No | | |
| Affiliated organization | Character | No | | |

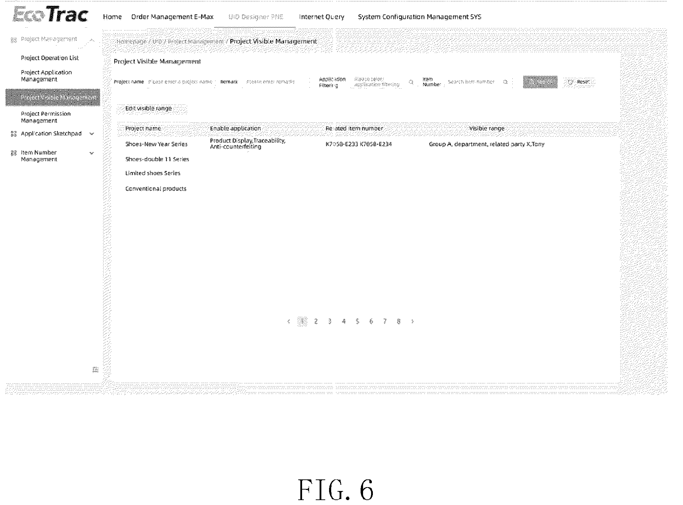

In one embodiment, referring to FIG. 6, which is a schematic diagram of a project visible management process according to an embodiment of the present invention. As shown in the figure, in the management unit 1, the first client clicks on Project Visible Management within Project Management to display the content of Project Visible Management, clicks on [Edit Visible Range] to enable the system to pop up an Edit Visible Range page, through which the person or organization who can see the project can be selected, and then clicks on Save, wherein the content of visible management is shown in Table 7.

**Table 7 Visible management content**

| Column name | Data type | Whether null values are allowed | Default | Description |
|---|---|---|---|---|
| Project name | Character | No | | |
| Enabling application | Character | No | | |
| Related item number | Character | No | | |
| Visible range | Character | No | | |

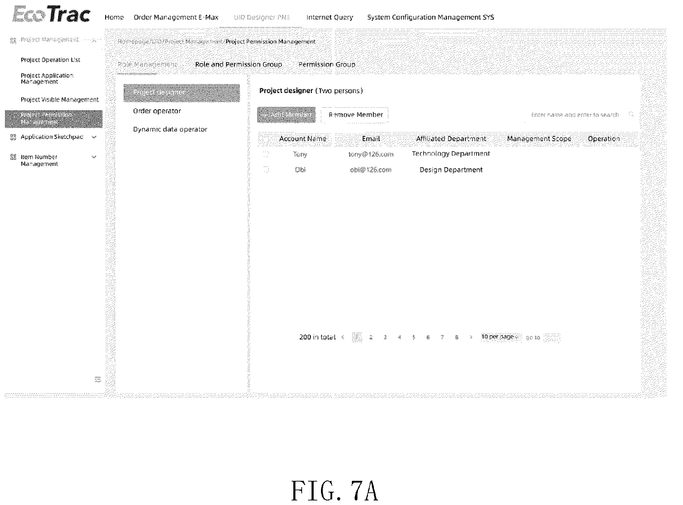

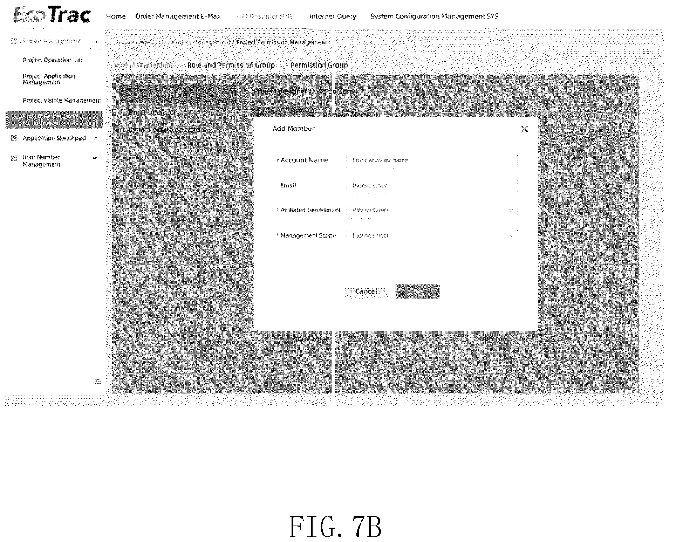

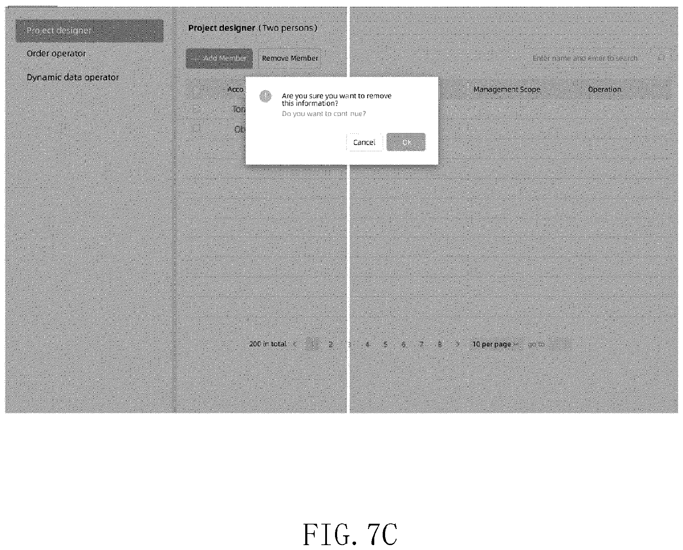

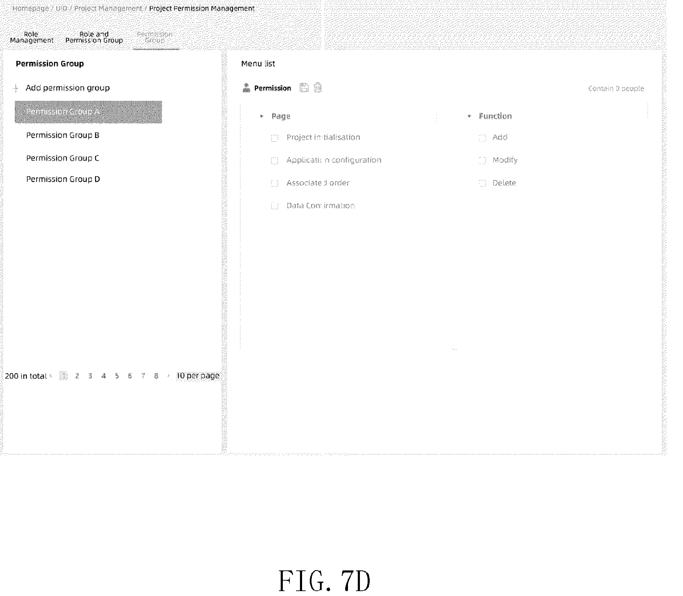

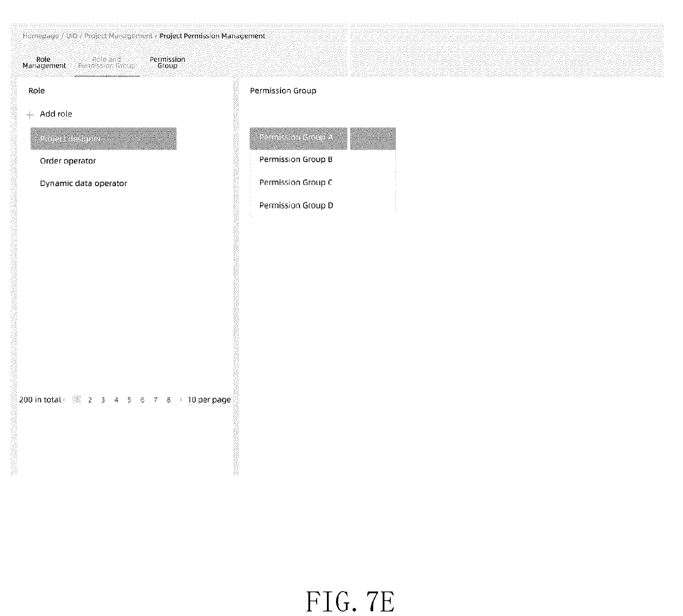

In one embodiment, referring to FIGS. 7A-7E, which are schematic diagrams of a project permission association process according to an embodiment of the present invention. As shown in the figure, in the management unit 1, the first client clicks on Project Permission Management within Project Management to enable the system to display the content of Project Permission Management, clicks on [Role Name]→ [Add Member] in the Role Management page to enable the system to pop up an Add Member page, selects relevant members, and then clicks on Save. Further, the first client can click on [Add Permission Group] in the Permission Group page to display Name New Permission Group on the system page, checks the corresponding page and function on the [Permission] page on the right side of the Permission Group page, clicks on the [Save] button on the [Permission] page in the Permission Group page, clicks on [Add Role] in the [Role] page in the Role and Permission Group page to enable the system to display Name New Role, selects Role on the [Role] page in the Role and Permission Group page, selects the Permission Group on the [Permission Group] page, and then clicks on Save, wherein the associated management information is shown in Table 8.

**Table 8 Association management information**

| Column name | Data type | Whether null values are allowed | Default | Description |
|---|---|---|---|---|
| Account name | Character | No | | |
| Email | Character | No | | |
| Affiliated department | Character | No | | |
| Management scope | Digital | No | | |

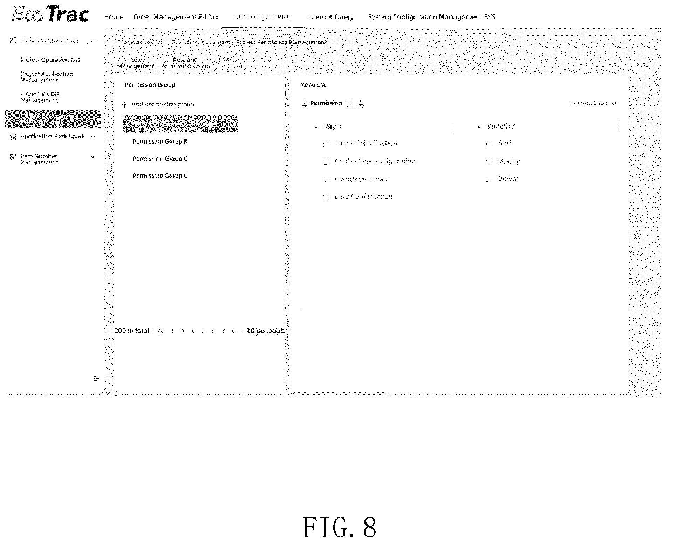

In one embodiment, referring to FIG. 8, which is a schematic diagram of a permission management process according to an embodiment of the present invention. As shown in the figure, in the management unit 1, the first client clicks on System Configuration Management, then clicks on Role Management of Organizational Structure to display a Permission Management page, then clicks on [Add Permission Group], selects Permission Group, checks the corresponding page and function in the [Permission] page of the Permission Group page, and then clicks on Save. In another embodiment, it is also possible to edit and modify the checked permission content.

In one embodiment, the label unit 2 is in signal connection with the management unit 1, and the first client inputs the landing page information and the label type to create label information, wherein the label type can be in the form of a one-dimensional bar code or a two-dimensional bar code. The first client then associates the label information with the order information, so that the label unit 2 can generate and embed a corresponding label number into the label information according to the order information, wherein the label number corresponds to each product, that is, one item, one code. Afterwards, the first client transmits the label information to the second client, so that the second client can manufacture labels according to the label information, wherein the second client can be a label manufacturer or other departments/members responsible for label manufacturing, but is not limited thereto.

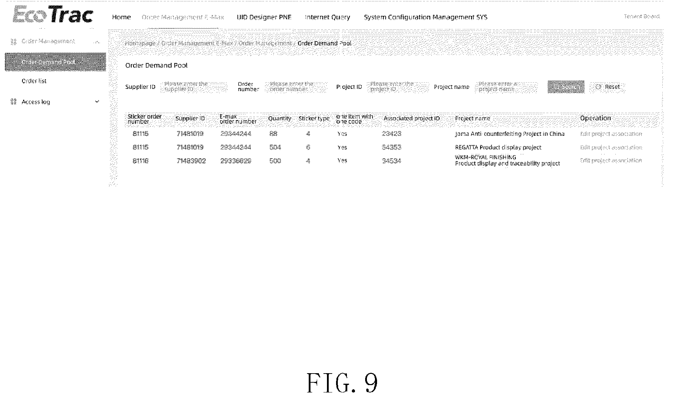

In one embodiment, referring to FIG. 9, which is a schematic diagram of an association process according to an embodiment of the present invention. As shown in the figure, for the process of associating the label information with the order information, in the order information in the management unit 1, the user can click on [Edit Project Association] behind the order list to enable the system to pop up an Edit Project Association page, selects Associate Projects, and clicks on Save. Preferably, Auto-associate Default Configuration of the order information can be opened, a user clicks on [Configure Default Association] button, the system pops up a default configuration window, where the projects associated with UID label product by default can be edited and managed, and then the user clicks on Save, wherein the order list is shown in Table 9.

**Table 9 Order list**

| Column name | Data type | Whether null values are allowed | Default | Description |
|---|---|---|---|---|
| Sticker order number | Character | No | | |
| Vendor ID | Character | No | | |
| E-Max order number | Character | No | | |
| Number | Digital | No | | |
| Sticker type | Digital | No | | |
| UID | Character | No | | |
| Associated project name | Character | Yes | | |

In one embodiment, the label unit 2 includes a product display interface 21, a traceability application interface 22, an anti-counterfeiting application interface 23 and a verification module 24, wherein the product display interface 21 displays or edits the label information, the first client can see the established label information or perform subsequent editing through the product display interface 21, wherein the first client can decide the display style of the label information, and can adopt an existing template stored in the system, or refer to a template set by the first client, where the template refers to the style of the label information, and the label information can include related information such as an image of the product, a name of the product, and a description of the product.

The traceability application interface 22 can display or edit a query page, the query page provides the sales information of the queried items, the sales information includes sales information related to sales area, Final Quality Control (FQC) time, and delivery time. Moreover, the traceability application interface 22 can also set the display style of the query page, and can adopt an existing template stored in the system, or refer to a template set by the first client, where the template refers to the style of the query page.

The anti-counterfeiting application interface 23 displays or edits a verification page, and can also set the display style of the verification page, and can adopt an existing template stored in the system, or refer to a template set by the first client, where the template refers to the style of the verification page. The verification page of the anti-counterfeiting application interface 23 includes a verification result, such as: "Anti-counterfeiting code XXX The anti-counterfeiting code you queried has been queried by X times at 17:06:09 on August 16, 2022.

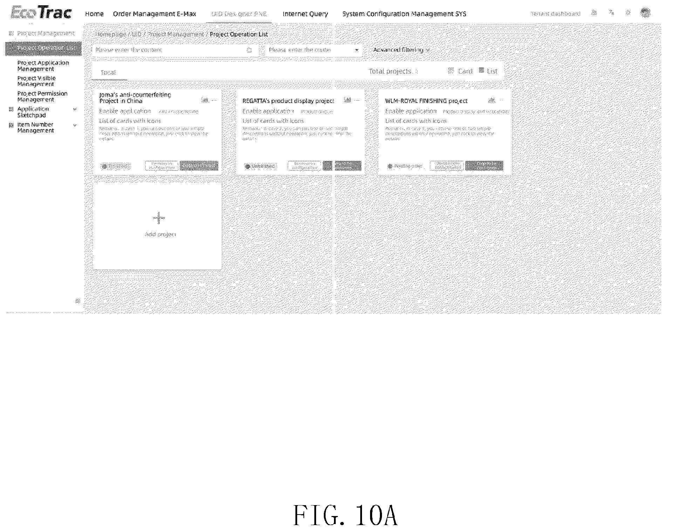

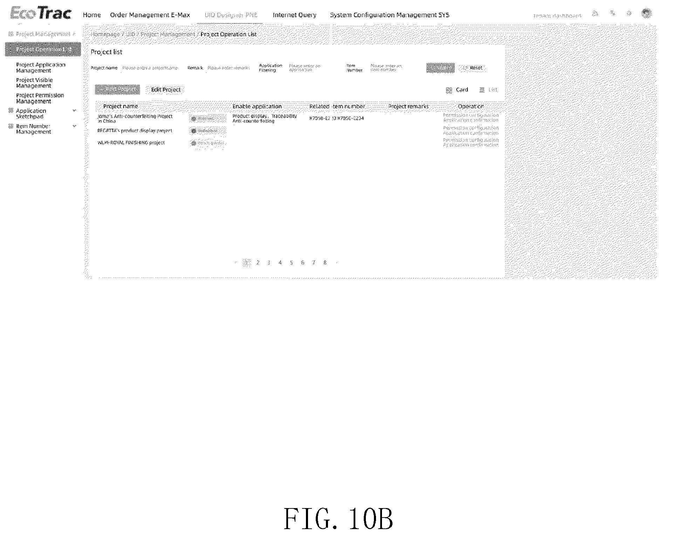

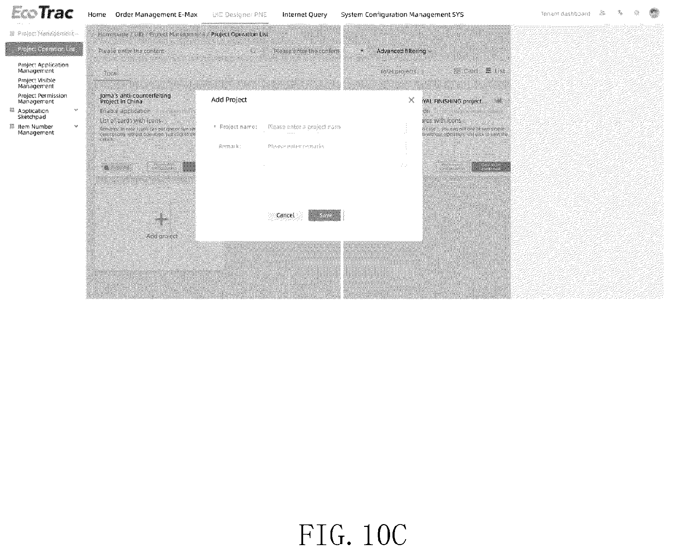

In one embodiment, referring to FIGS. 10A-10C, which are schematic diagrams of a label information editing process according to an embodiment of the present invention. As shown in the figure, for a process of editing label information, a user can input project name and remark in the label unit 2, click on Save in Project Operation List, click on [Add Project] displayed on the Project Operation List page to open an Add Project page, input project name and remark, and then click on Save. When it is necessary to edit the label information again, the user can click on the [Edit Project] button to open a default configuration window, where the projects associated with UID label product by default can be edited and managed, click on Save and input the next step of [Application Studio] configuration. At this time, the newly created project name will be displayed in the project operation list/card in the product display interface 21, and the status in the project operation list/card will be displayed as "Unfinished" and "Data to be confirmed". At the same time, the number of projects counted in the project operation list/card is +1, and the project operation list is shown in Table 10.

**Table 10 Project operation list**

| Column name | Data type | Whether null values are allowed | Default | Description |
|---|---|---|---|---|
| Project name | Character | No | | |
| Enabling application | Character | Yes | | |
| Related item number | Character | Yes | | |
| Project remark | Character | Yes | | |
| Status | Character | No | | |

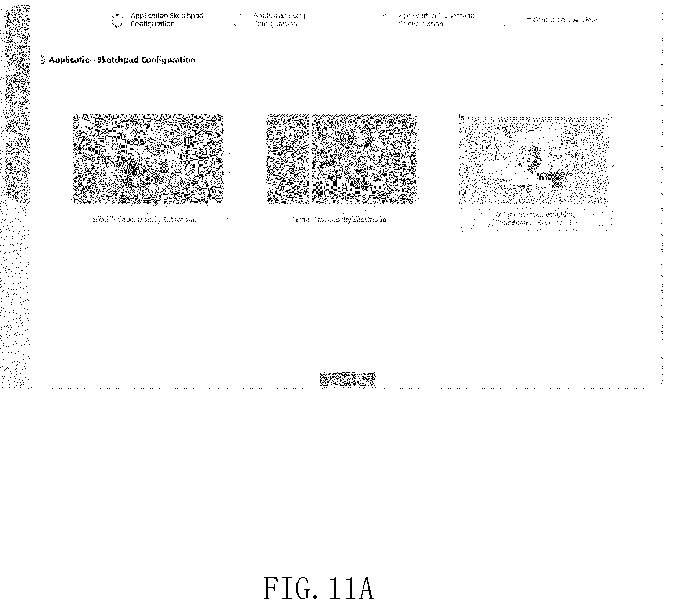

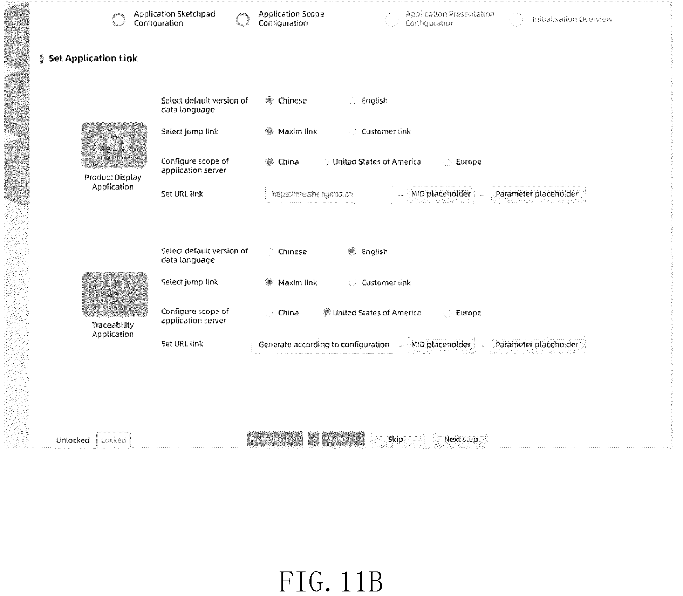

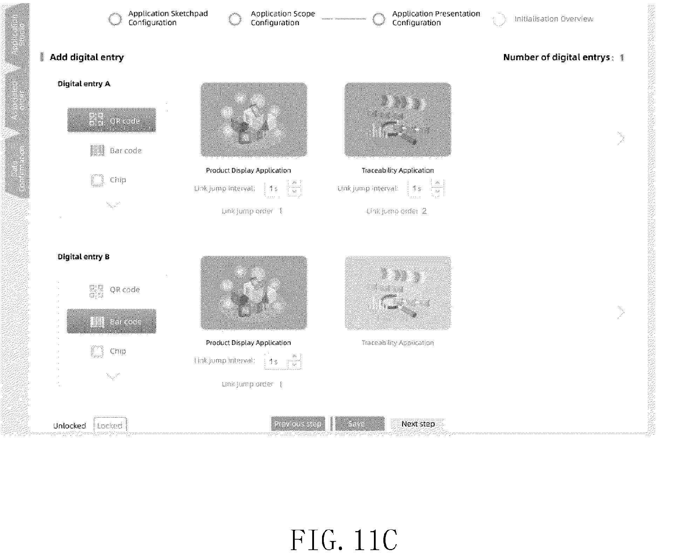

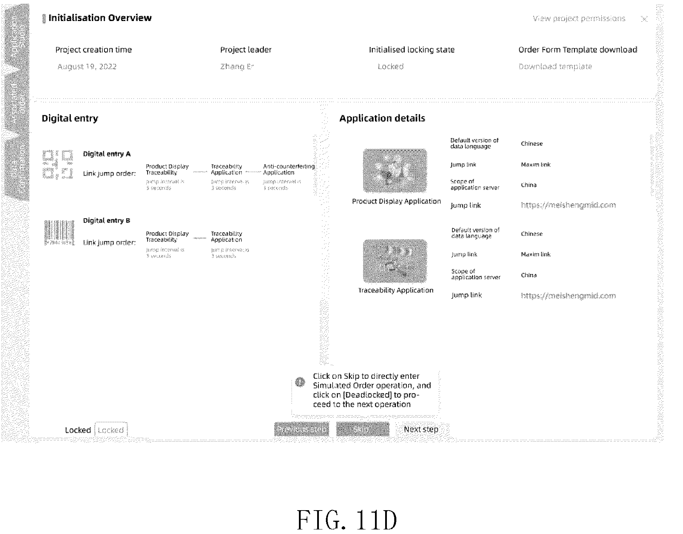

In one embodiment, referring to FIGS. 11A-11D, which are schematic diagrams of a label information editing process according to an embodiment of the present invention. As shown in the figure, in the product display interface 21, a user can configure content, language, application region, URL link and digital entry mode, and determine order templates for the selected application. The user can click on the project name displayed on the project operation list page in the product display interface 21, to enable the system to enter the default page of the application studio-[Application Sketchpad Configuration] page, and select the application to be configured in the selected project and enter the application sketchpad to configure the application content, click on the [Next] button or the [Application Scope Configuration] labelled button on the [Application Sketchpad Configuration] page to enter the [Application Scope Configuration] page, configure the data default language, jump link, application server, URL link and white list link setting application of the application in the selected project, and click on the [Next] button or the [Application Presentation Configuration] labelled button to enter the [Application Presentation Configuration] page, and finally, click on [Add Digital Entry] to select the digital entry type and application and set the application jump order and application jump interval, and click on Save to complete the configuration, wherein the order template can be downloaded to store the application and content of the project, create data in the corresponding server, and store the related digital entry URL, digital entry jump mode and interval time, so as to determine the order template.

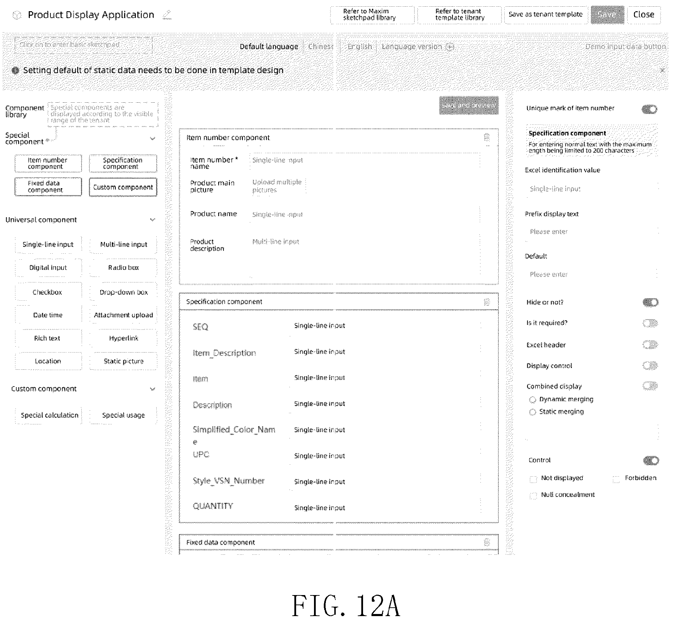

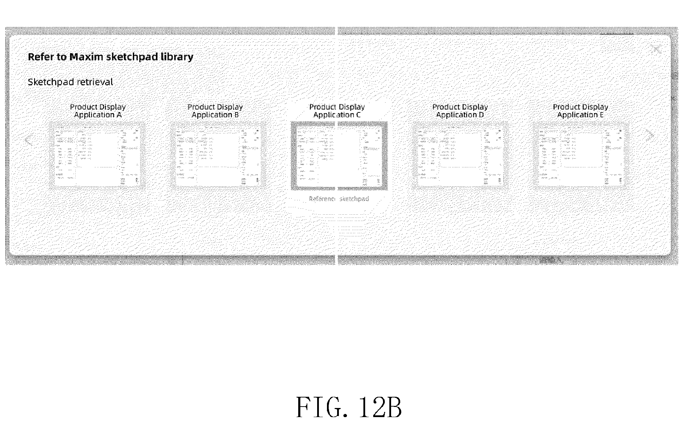

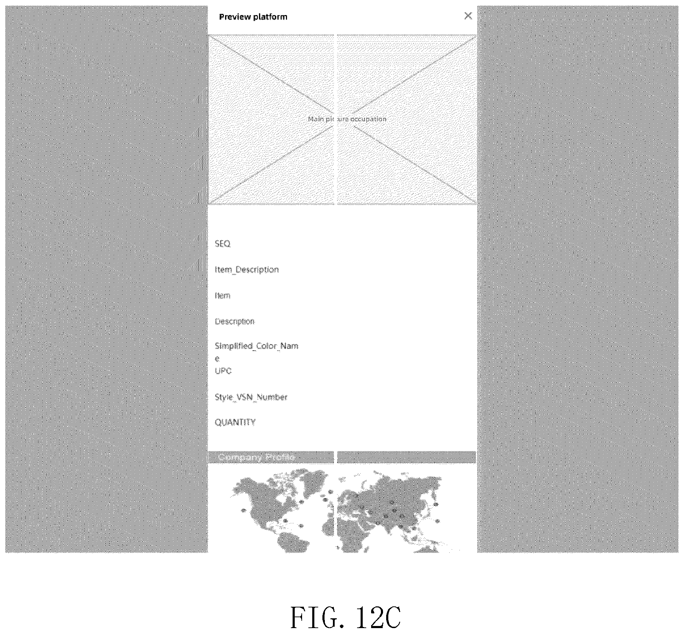

In one embodiment, referring to FIGS. 12A-12C, which are schematic diagrams of a product display page making process according to an embodiment of the present invention. As shown in the figure, when the system enters the default page of the application studio-[Application Sketchpad Configuration] page, the user clicks on [Product Display Sketchpad] to enter the Sketchpad Settings page, and drags product controls and special components to a predetermined position, set product control attributes, and clicks on Save to complete the configuration. In another embodiment, the user can also use the prepared templates through the template library and clicking on the preset template, and the pages are arranged according to the selected preset template style, which can be subjected to personalised modification.

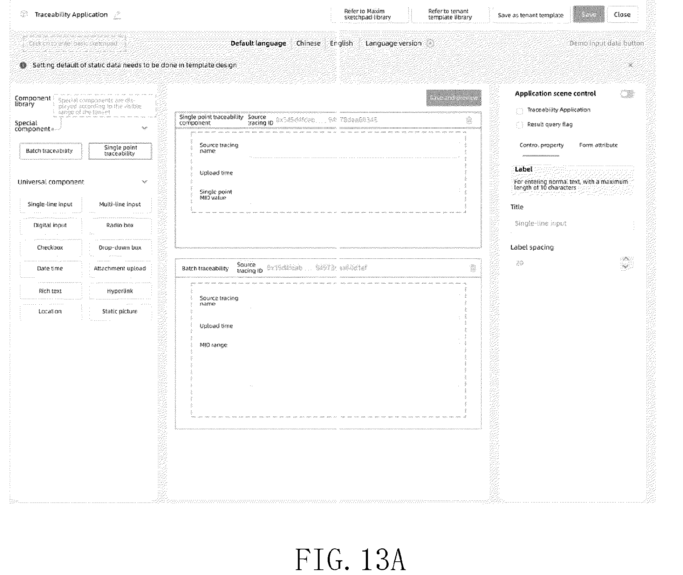

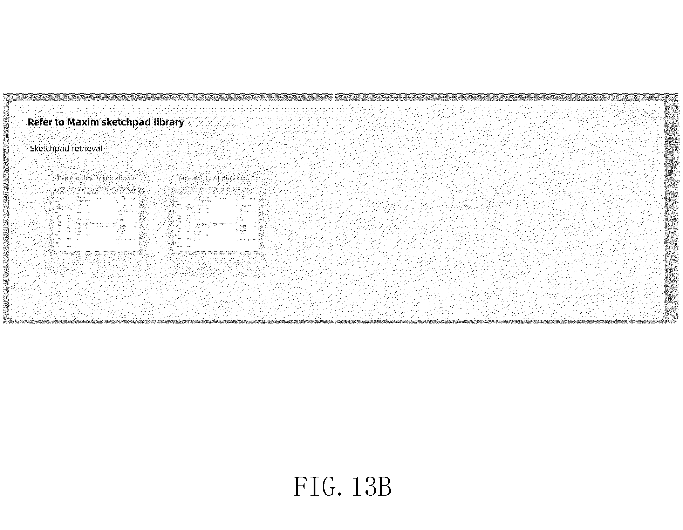

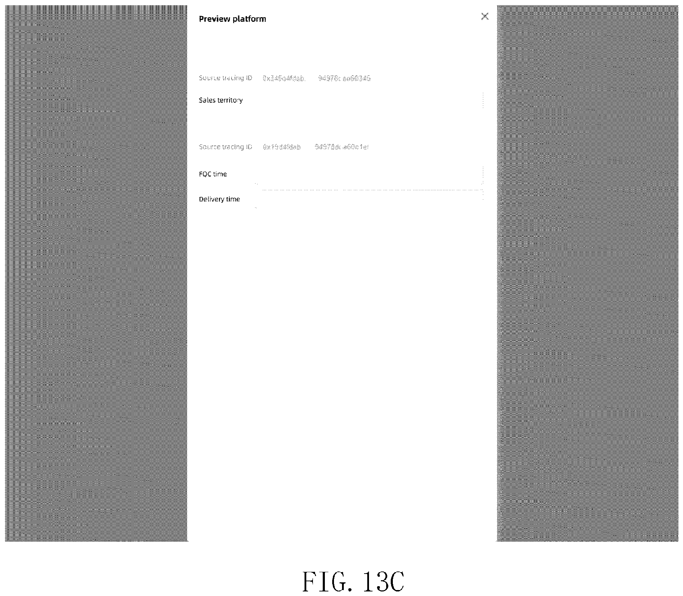

In one embodiment, referring to FIGS. 13A-13C, which are schematic diagrams of a traceability application interface making process according to an embodiment of the present invention. As shown in the figure, when the system enters the default page of the application studio-[Application Sketchpad Configuration] page, the user clicks on [Traceability Sketchpad] to enter the Sketchpad Settings page, drags product controls and traceability special components to a predetermined position, sets product control attributes, and clicks on Save to complete the configuration. In another embodiment, the user can also use the prepared templates through the template library and clicking on the preset template, and the pages are arranged according to the selected preset template style, which can be subjected to personalised modification, but is not limited thereto.

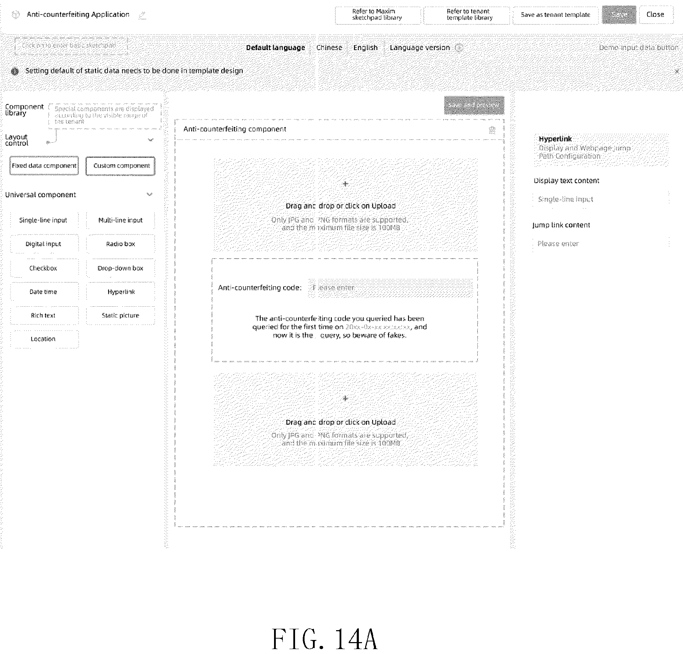

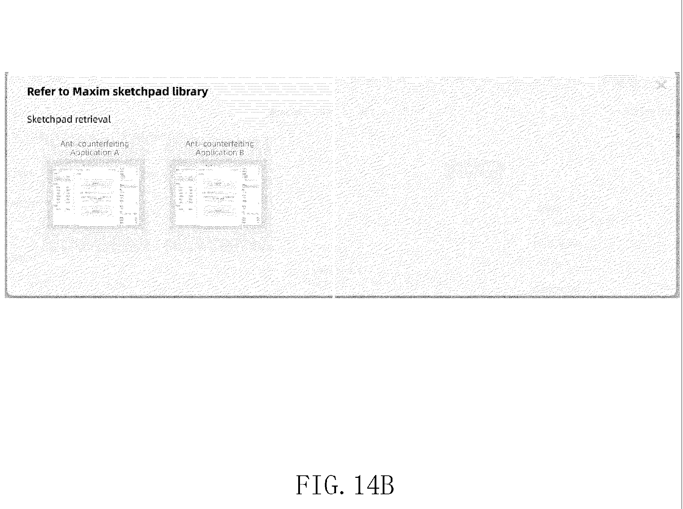

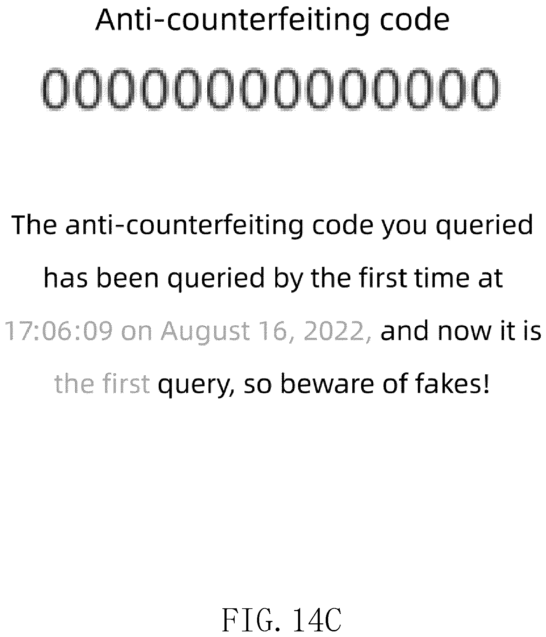

In one embodiment, referring to FIGS. 14A-14C, which are schematic diagrams of an anti-counterfeiting application interface making process according to an embodiment of the present invention. As shown in the figure, when the system enters the default page of the application studio-[Application Sketchpad Configuration] page, the user clicks on [Anti-counterfeiting Application Sketchpad] to enter the Sketchpad Settings page, drags product controls and traceability special components to a predetermined position, sets product control attributes, and clicks on Save to complete the configuration. In another embodiment, the user can also use the prepared templates through the template library and clicking on the preset template, and the pages are arranged according to the selected preset template style, which can be subjected to personalised modification, but is not limited thereto.

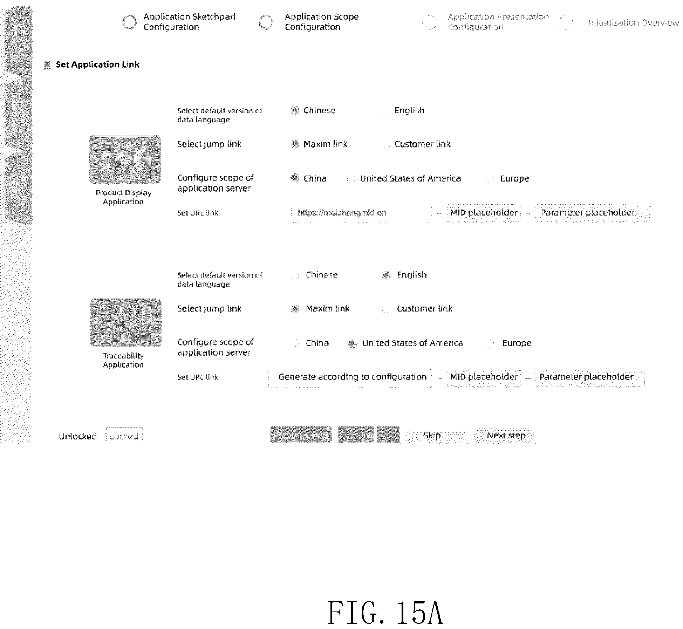

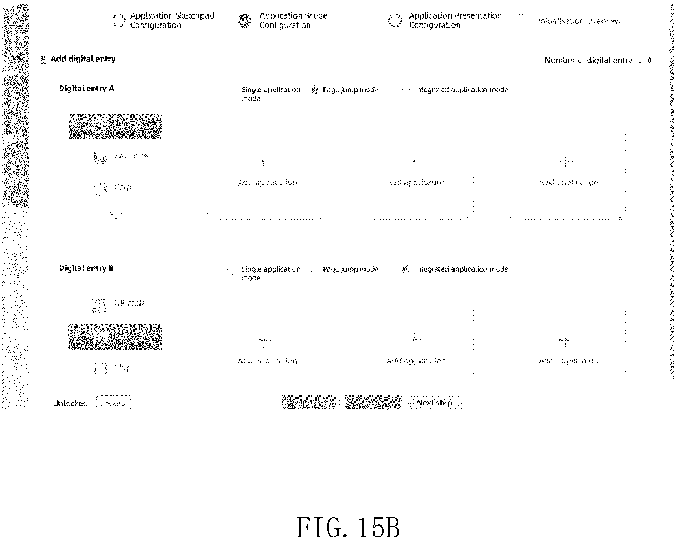

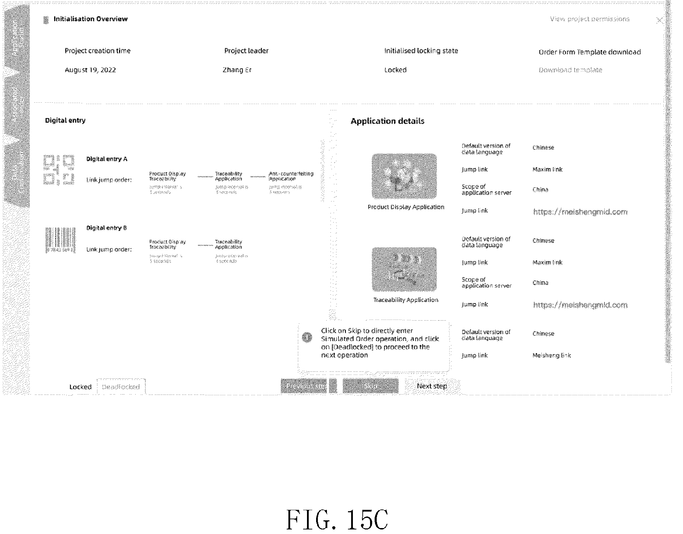

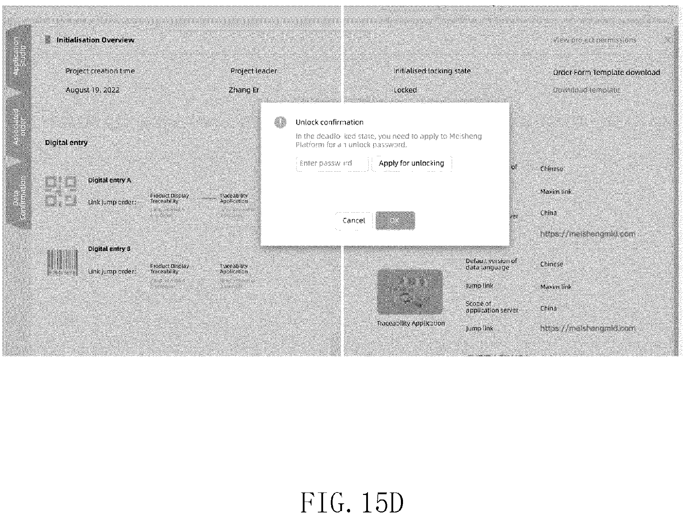

In one embodiment, referring to FIGS. 15A-15D, which are schematic diagrams of a process of setting locked and unlocked states according to an embodiment of the present invention. As shown in the figure, when the user wants to lock the application scope configuration, the system will enter the default page of the application studio-[Application Sketchpad Configuration] page, and the user clicks on [Lock] after configuring the [Application Scope Configuration] and clicking on [Save]; when the user wants to lock the application presentation configuration, the system will enter the default page of the application studio-[Application Sketchpad Configuration] page, and the user clicks on [Lock] on the [Application Presentation Configuration] page; when the user wants to lock the initialisation overview, the system will enter the default page of application studio-[Application Sketchpad Configuration] page, and the user clicks on [Lock] on the [Initialisation Overview] page.

In one embodiment, when the user wants to unlock the application scope configuration, the system will enter the default page of the application studio-[Application Sketchpad Configuration] page, and the user changes the Lock button to the [Unlock] button at the [Application Scope Configuration], and clicks on the [Unlock] button to enter the unlock password: if the password is correct, the [Application Scope Configuration] page will be restored to the unlocked state; if the password is incorrect, the system will prompt that the password is incorrect and the unlocking is unsuccessful. When the user wishes to unlock the initialisation overview, the system will enter the default page of the application studio-[Application Sketchpad Configuration] page, and change the lock button to the [Unlock] button on the [Initialisation Overview] page, and the user clicks on the [Unlock] button to enter the unlock password: if the password is correct, the [Application Scope Configuration] page will be restored to the unlocked state; if the password is incorrect, the system will prompt that the password is incorrect and the unlocking is unsuccessful.

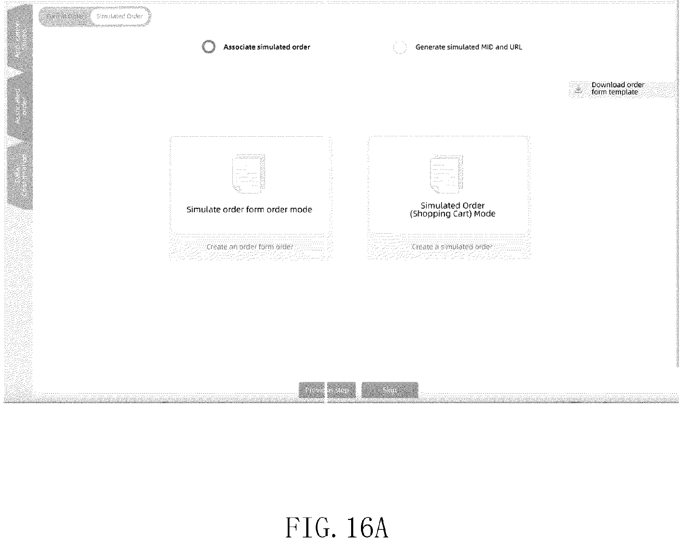

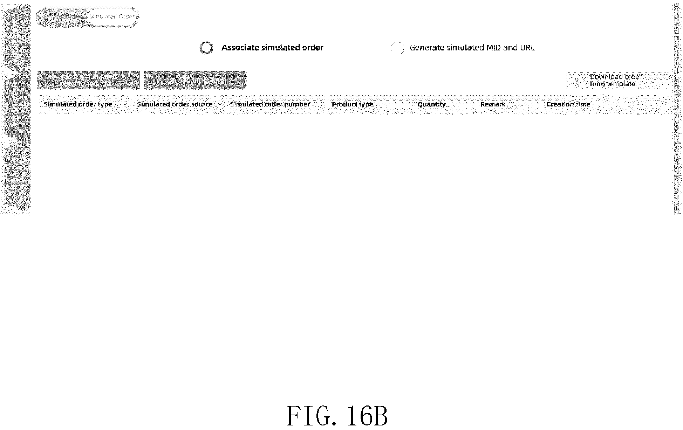

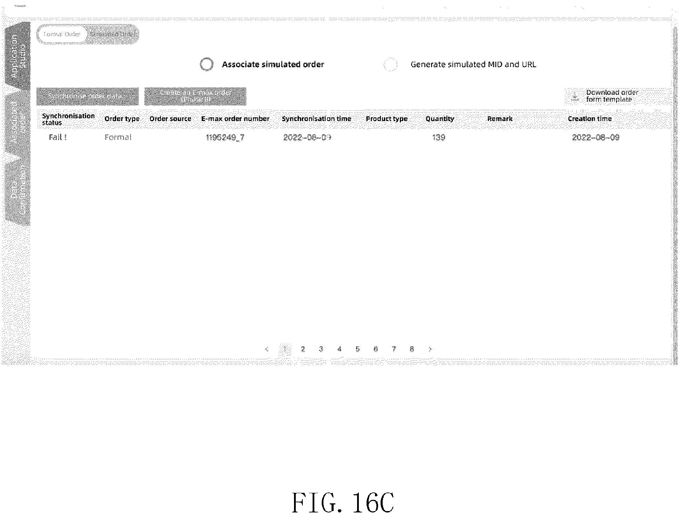

In one embodiment, referring to FIGS. 16A-16C, which are schematic diagrams of a process of operating an associated order according to an embodiment of the present invention. As shown in the figure, when the user wants to operate a simulated associated order, the user can click on [Associated Order] to display the Associated Order page in the project in the system, and then click on [Simulated Order]/[Simulated Order Mode]/[Simulated Order (Shopping Cart) Mode]. When the user wants to operate a formal associated order, the user can click on [Associated Order] to display the associated order page in the project in the system, and click on [Formal Order] button, where the order data within the system is as in Table 11.

**Table 11 Order data**

| Column name | Data type | Whether null values are allowed | Default | Description |
|---|---|---|---|---|
| Synchronisation status | Character | No | | |
| Order type | Character | Yes | | |
| Order source | Character | Yes | | |
| E-Max order number | Character | No | | |
| Synchronisation time | Time | No | | |
| Product type | Character | No | | |
| Number | Character | Yes | | |
| Remark | Character | Yes | | |
| Creation time | Time | No | | |

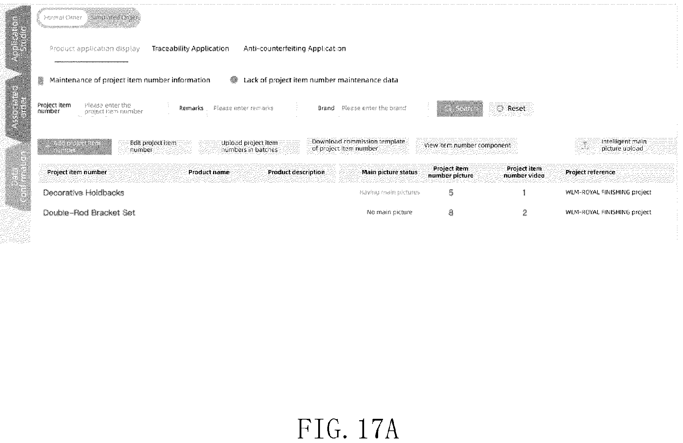

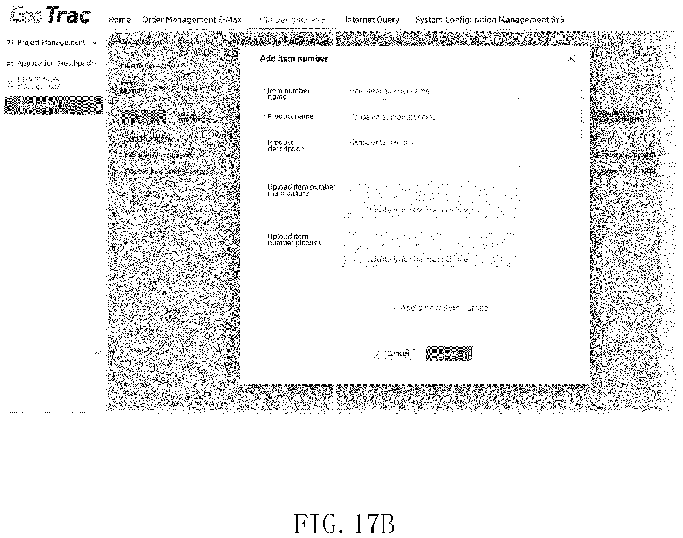

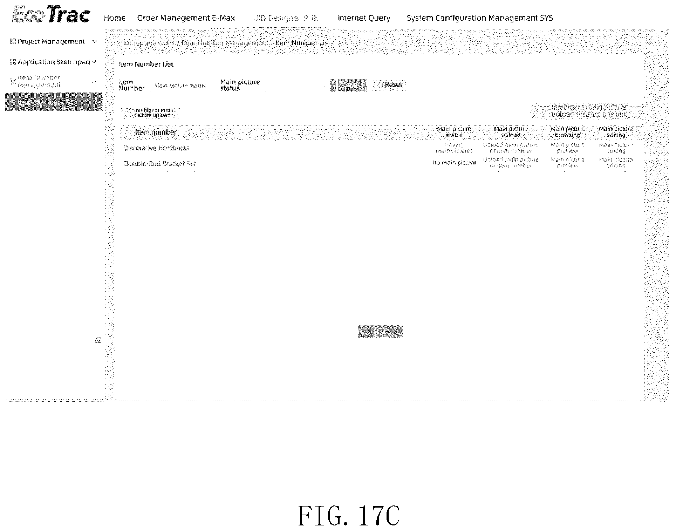

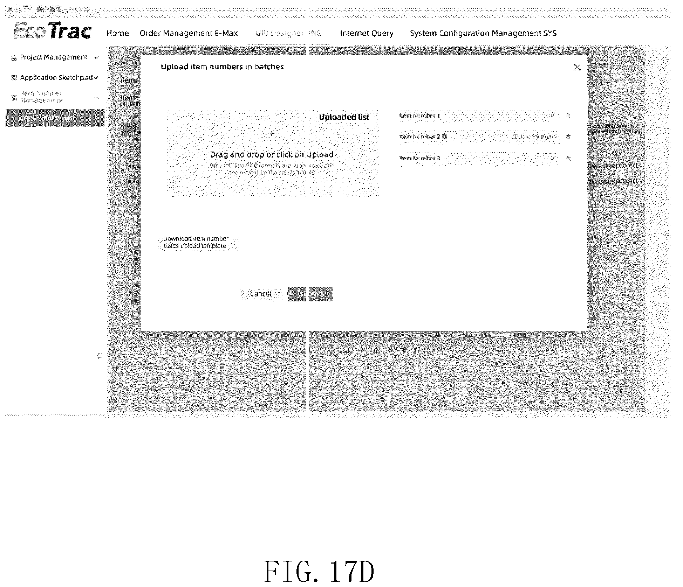

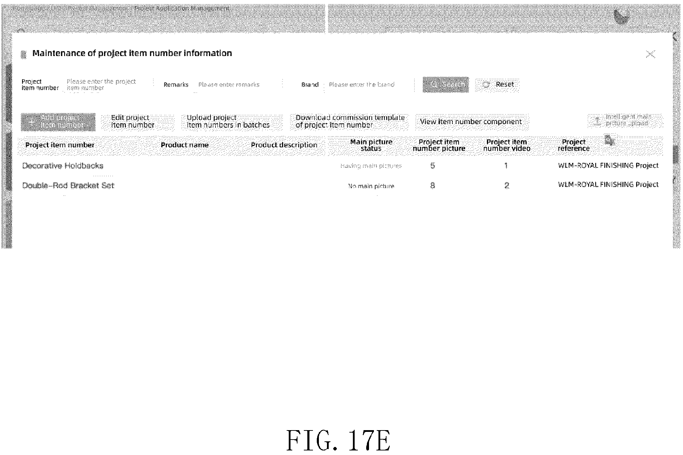

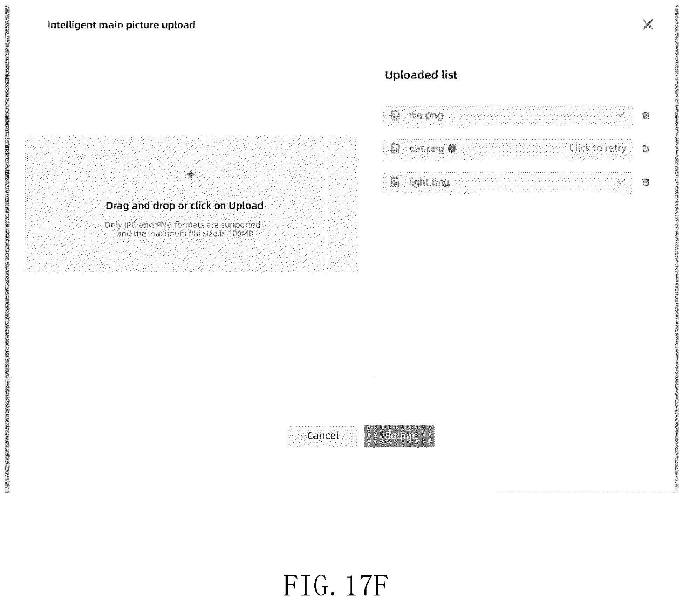

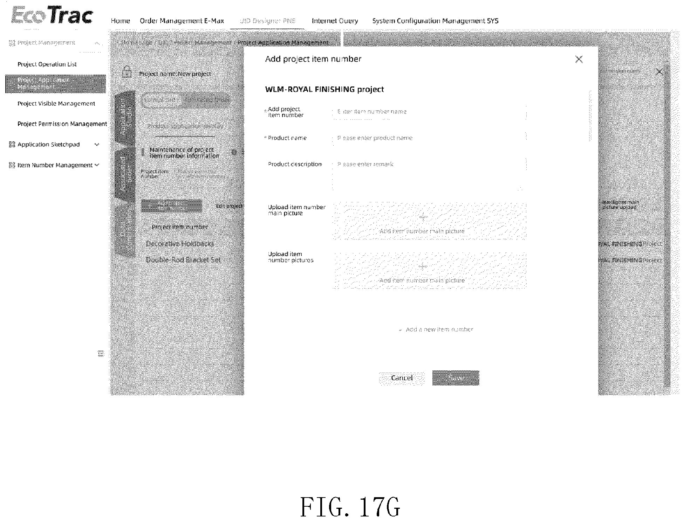

In one embodiment, referring to FIGS. 17A-17G, which are schematic diagrams of a process of maintaining item number information according to an embodiment of the present invention. As shown in the figure, when the first client maintains all the data associated with the item number to be displayed in the display application, including but not limited to the item number, products, pictures and other data contents, the first client can click on [Add Item Number] in the item number list page in the order information in the management unit 1 to input relevant information, and then click on Save. If the first client wants to perform batch editing of the item number main pictures, the first client can click on [Batch Edit Item Number Main Pictures] to edit the related item number main pictures, then click on the [Batch Upload Item Number] button, drag or click on Upload Excel Template to batch upload item numbers, and clicks on [Download Item Number Batch Uploading Template], where the item number list page information is shown in Table 12.

**Table 12 Item number list page information**

| Column name | Data type | Whether null values are allowed | Default | Description |
|---|---|---|---|---|
| Item number | Character | No | | |
| Product name | Character | Yes | | |
| Product description | Character | Yes | | |
| Main picture status | Character | Yes | | |
| Item number picture | Hyperlink | Yes | | |
| Item number extension field var001 | Character | Yes | | |
| Project application | Character | Yes | | |

In one embodiment, when the first client wants to upload and maintain the data of the item number and related main picture information required for product display in this project, the first client can click on the project name in the order information in the management unit 1 to enter the project editing page, clicks on [Data Confirmation] in the project, clicks on [Add Item Number] to enter relevant contents and clicks on Save; if the first client wants to upload the smart main pictures, the first client can click on the [Upload Smart Main Picture] button, drag or upload the main picture file, and upload the item numbers in batches.

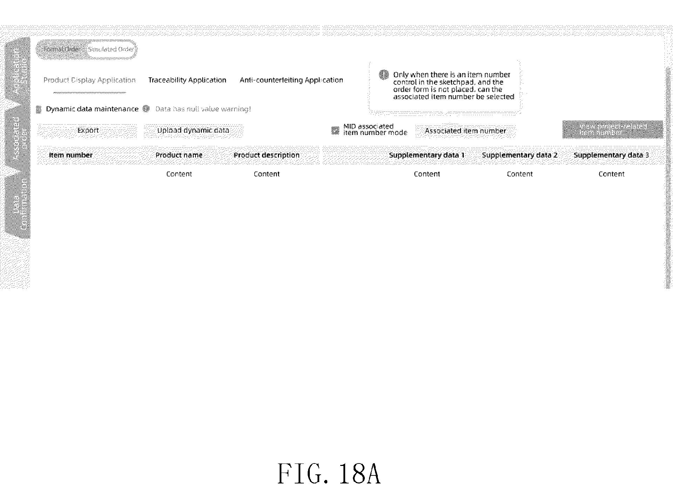

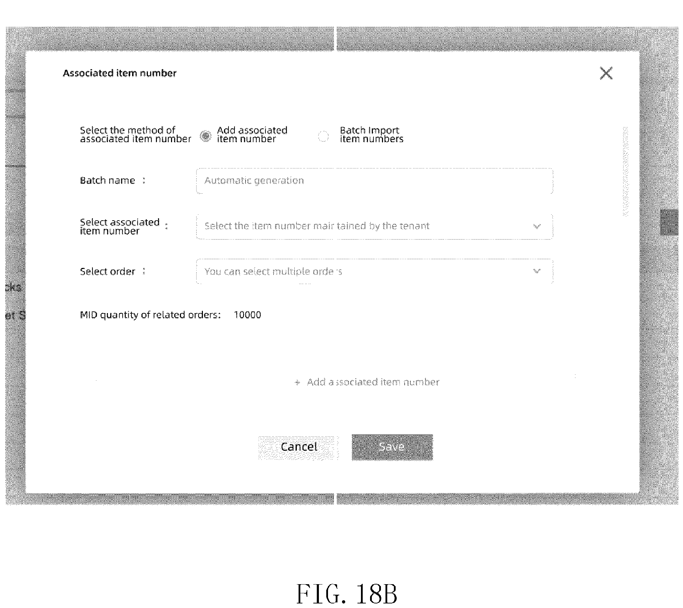

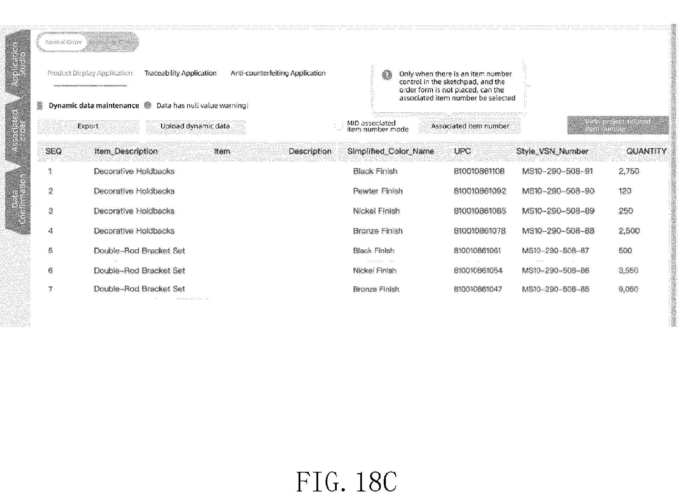

In one embodiment, referring to FIGS. 18A-18C, which are schematic diagrams of a dynamic data maintenance process of a product display interface according to an embodiment of the present invention. As shown in the figure, by setting the detailed data of the simulated or formal order in combination with the page field structure of the product display sketchpad, a batch of mobile phone-displayed pages are dynamically generated. When the simulated order/formal order-post-binding is performed, the user can click on [Dynamic Data Maintenance] of [Data Confirmation], and then click on [Label Association Mode] to enable the system to enter the post-binding process, and click on [Upload Dynamic Data] to upload the related field information of the item number to enable the system to display the characteristic values of the dynamic data, then select the binding method, and click on Add Associated Account Number and fill in the content information of the associated account number, or click on Batch Import Associated Account Number to import the related label information in batches. When the simulated order-pre-binding is performed, the user can click on [Dynamic Data Maintenance] of [Data Confirmation], and click on [Upload Dynamic Data] to upload the related field information of the item numbers to enable the system to display the characteristic values of the dynamic data.

When dynamic data maintenance-pre-binding of a simulated order/formal order is performed, the user can click on [Upload Dynamic Data] to enable the system to display the characteristic values of the dynamic data and generate a product display interface corresponding to the characteristic values, and compare the newly generated order data, if the order data are all aligned with the set rules of characteristic data, the order is bound to the product display interface corresponding to the characteristic values, and if there are order data outside the range of the characteristic data, the management unit 1 will remind that there is dynamic data not configured, and after updating the dynamic data, the user can click on [Upload Dynamic Data] to enable the system to match all the order data.

When the dynamic data maintenance-post-binding of a simulated order/formal order is performed, the corresponding product display interface is generated through the operation of [Associate Item Number] in combination with the content of the product display sketchpad. According to the operation of [Associate Item Number], the label number range of the corresponding item number is generated, the URL link rules confirmed by the application studio are obtained, and the corresponding binding relationship of the corresponding product display interface, label number range and URL link is generated.

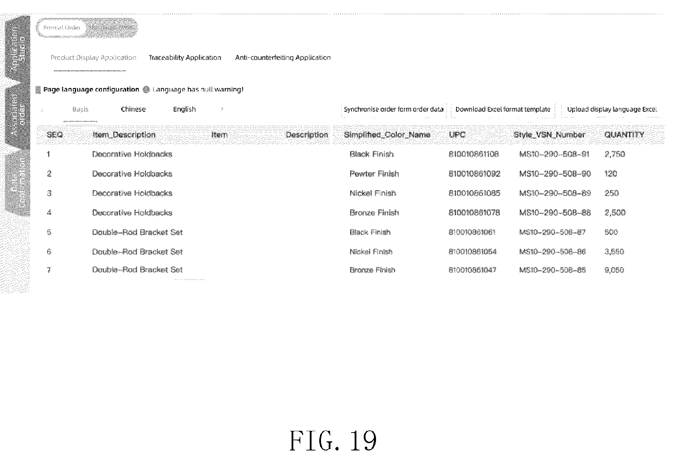

In one embodiment, referring to FIG. 19, which is a schematic diagram of a language configuration process of a product display interface according to an embodiment of the present invention. As shown in the figure, in the product display interface, the user can click on the [Page Language Configuration] button to configure the data values in multiple languages, and then click on OK, and can click on the [Synchronise Order] button at the same time. When the user wants to upload the display language, the user can click on [Upload Display Language].

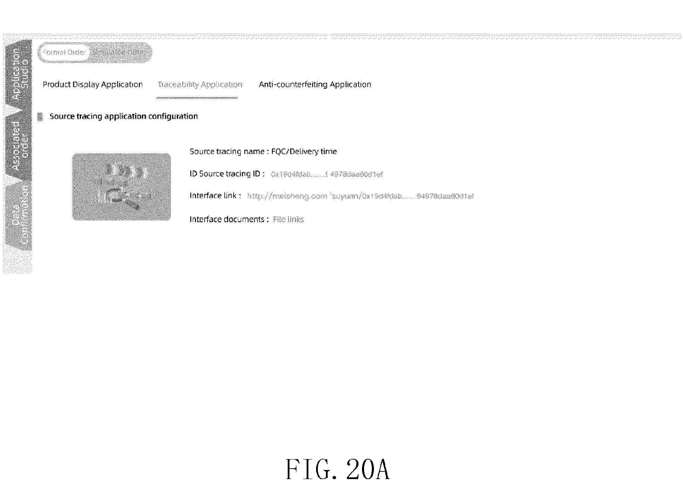

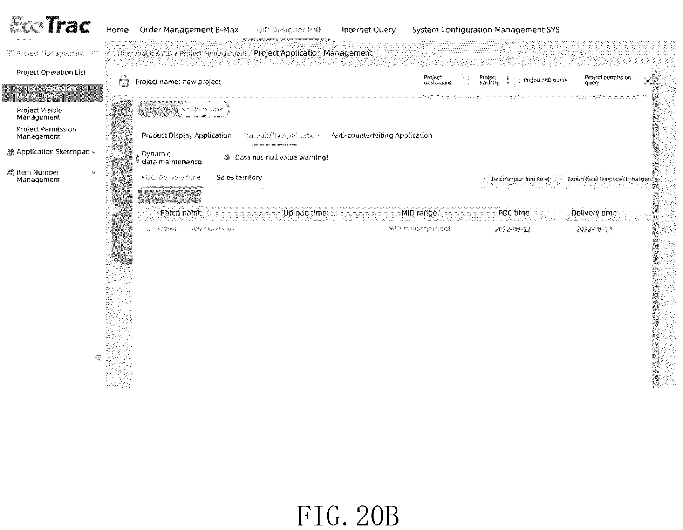

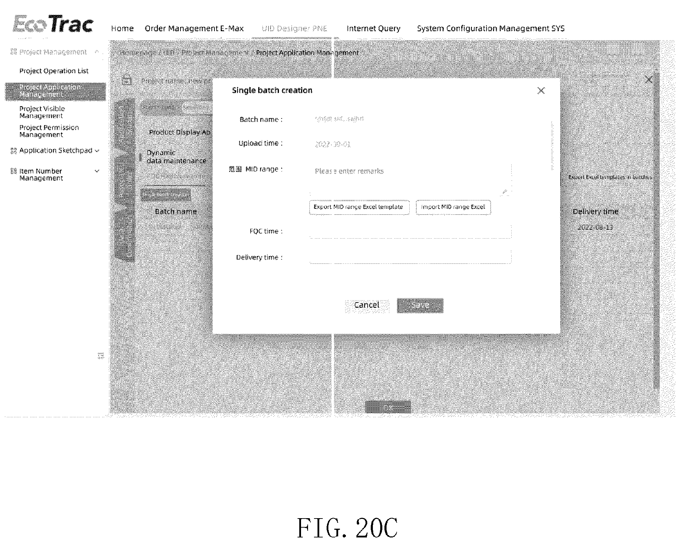

In one embodiment, referring to FIGS. 20A-20C, which are schematic diagrams of a process of configuring data of a source tracing site of a traceability application according to an embodiment of the present invention. As shown in the figure, in the traceability application interface 22, after clicking on the Traceability Application label of Data Confirmation, the user clicks on Source Tracing Application Configuration to configure a data interface of the source tracing site, and finally clicks on OK to enable the system to save the configured data interface link of the source tracing site, where the data of the source tracing site of the traceability application is shown in Table 13.

**Table 13 Data of source tracing site of traceability application**

| Column name | Data type | Whether null values are allowed | Default | Description |
|---|---|---|---|---|
| Source tracing name | Character | No | | |
| Source tracing ID | Character | No | | |
| Interface link | Character | No | | |
| Interface document | Link | No | | |

In one embodiment, when there is no source tracing site interface, the user can write the data of each source tracing site can be written by uploading data, click on the Traceability Application label on the data confirmation page, click on Dynamic Data Confirmation, select the Source Tracing Site label of Data Maintenance, click on the [Single Batch Creation] button to create batch information, and clicks on Save. If a large amount of data needs to be uploaded, the user can click on the [Batch Import] button to enable the system to pop up a data import window, and drags or uploads data sources, where the source tracing site data is shown in Table 14.

**Table 14 Source tracing site data**

| Column name | Data type | Whether null values are allowed | Default | Description |
|---|---|---|---|---|
| Batch name | Character | No | | |
| Batch ID | Character | No | | |
| Uploading time | Time | No | | |
| Label coding range | Character | No | | |
| Custom character var001 | Character | No | | |
| Custom character var002 | Character | No | | |

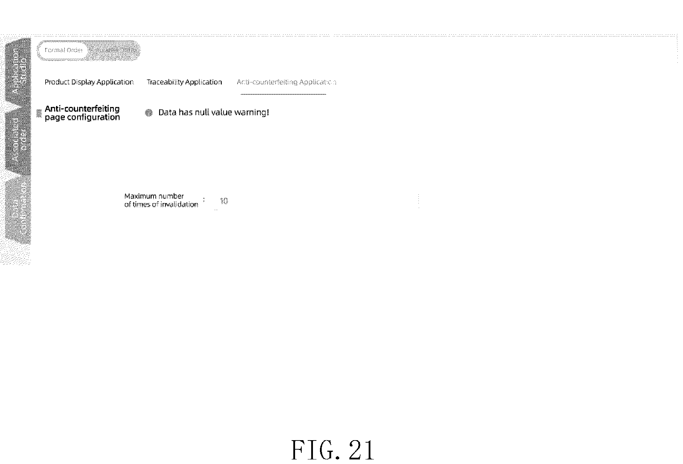

In one embodiment, referring to FIG. 21, which is a schematic diagram of an anti-counterfeiting application configuration process according to an embodiment of the present invention. As shown in the figure, in the anti-counterfeiting application interface 23, when the user wants to configure the maximum number of times to query the label information of the anti-counterfeiting application, the user can click on the Anti-counterfeiting Application label on the Data Confirmation page to enter the maximum number of times of invalidation, and clicks on the OK button.

The verification module 24 is used for label anti-counterfeiting verification, when a fourth client makes a query, the fourth client obtains the label information through the label, and is linked to the verification module 24 through the landing page information in the label information, so that the verification module 24 can perform verification according to the label information, and generate and output a verification result to the fourth client, wherein the fourth client can be a consumer or other user who wants to verify the label, but is not limited thereto. In one embodiment, the fourth client can read the label through the mobile phone device and obtain the label information, wherein the landing page information in the label information is exemplified by Uniform Resource Locator (URL), and is connected to the verification module 24 by clicking or automatically accessing the URL link for verification.

The matching unit 3 is in signal connection with the management unit 1, and is used for receiving order information and comparing the order information with the database 4 to generate a matching result, wherein the database 4 includes a plurality of manufacturer information, which include the corresponding capital amount, manufacturing capacity, distance and evaluation, that is, demand information in the order information is matched with the actual manufacturer information. For example, the higher the number of products in the order, the higher the expected capital amount and/or manufacturing capacity of the manufacturer can be set. For another example, if it is urgent to get the manufactured items, the distance between the manufacturer and the first client can be set to be no more than XX kilometers, so as to shorten the time to get the manufactured items. For another example, if the manufacturer has evaluation of delayed delivery or defective goods, an excluded match may be set, but is not limited thereto. The matching result can include several manufacturers, so the first client can select the third client according to the matching result and transmit the matching information to the third client through the matching unit 3.

In one embodiment, after the third client receives the matching information, and transmits order receiving information back to the management unit 1, the management unit 1 transmits order information and the labels to the third client according to the order receiving information, so that the third client can manufacture the items according to the order information, and correspondingly place the labels on the items according to the order information. Preferably, the order information includes item numbers and label numbers, i.e., each item corresponding to one label number, but is not limited thereto.

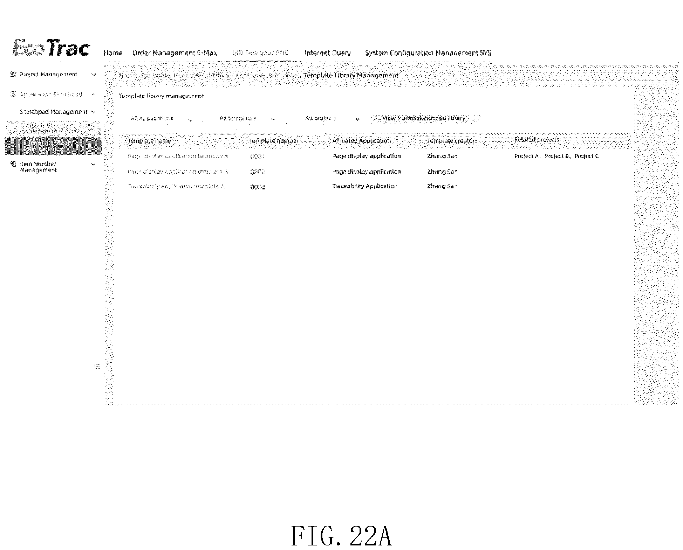

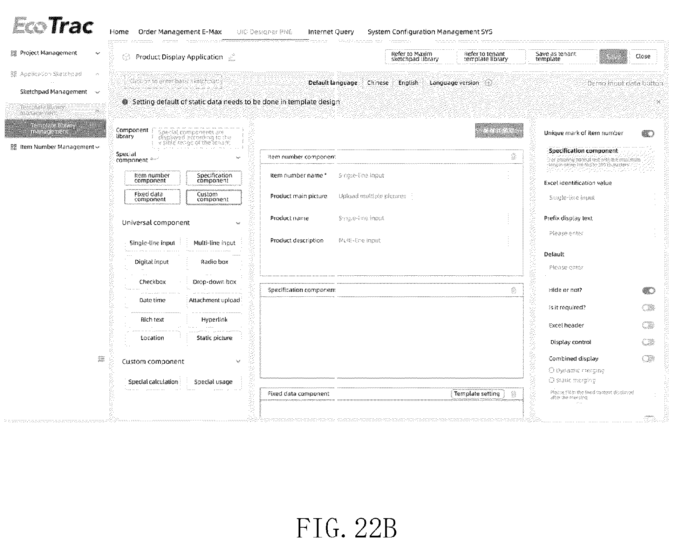

In one embodiment, referring to FIGS. 22A-22B, which are schematic diagrams of a template library management process according to an embodiment of the present invention. As shown in the figure, the database 4 further contains application templates. Through Template Library Management in the product display interface 21, the user can click on Template Name in the list in the Template Library Management page to pop up the related sketchpad page, bring out the set application layout in the sketchpad, and edit and modify the existing layout as required, and click on Save, where the template list is shown in Table 15.

**Table 15 Template list**

| Column name | Data type | Whether null values are allowed | Default | Description |
|---|---|---|---|---|
| Template name | Character | No | | |
| Template number | Character | No | | |
| Affiliated | Character | No | | |
| application | | | | |
| Template creator | Character | No | | |
| Related project | Character | No | | |

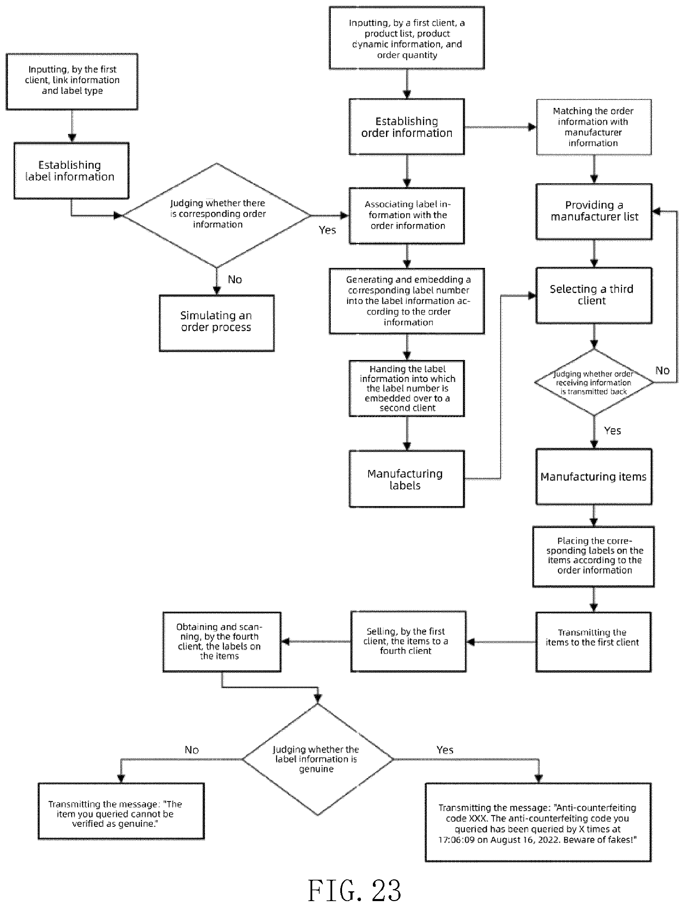

In order to provide a further understanding of the present invention, preferred embodiments of the present invention will be described below with reference to the detailed description to facilitate the understanding of those skilled in the art. Referring now to FIG. 23, a flowchart of an embodiment of the present invention is shown. As shown in the figure, the execution flow of the integrated Saas system in one embodiment of the present invention is as follows:
The first client inputs the demand pool of order information in the management unit 1, that is, the product list, product dynamic information, product quantity and other information to create order information, and the first client inputs the landing page information and label type to create label information. After the label information is established, it will be judged whether there is corresponding order information. If there is no order information, the order process will be simulated to provide the first client with the follow-up process. On the contrary, if there is order information, the label information will be associated with the order information, that is, the label information and the order information are linked to each other. At this time, a corresponding label code will be generated according to the order information, and will be coded according to the number of products in the order to form UID, and the corresponding label number will be embedded in the label information and handed over to the second client for label manufacturing.

After the order information is established, the order information will be matched with the manufacturer information, and a relatively suitable manufacturer list will be selected according to the requirements of the first client. The first client can be provided to select the third client, and the specific third client can also be designated through the first client, so it is not limited herein. After the third client is selected, the order information and labels will be transmitted to the third client according to the order receiving information after the third client returns the order receiving information. After items are manufactured and the labels are placed on the corresponding items according to the order information, each item has a unique label. At this time, the items can be transmitted back to the first client. When the first client sells the items to the fourth client, the fourth client can query whether the items are genuine or not through the labels on the items, and the verification results can appear after the fourth client scans the labels through the mobile phone device.

To sum up, in one embodiment of the present invention, the label information is associated with the order information through the label unit to manufacture labels, and the order information is further matched with the database through the matching unit to produce suitable manufacturers, so as to greatly reduce the process of selecting manufacturers and label processing and improve the overall manufacturing efficiency.

The foregoing is only the preferred embodiments of the present invention, and it should be noted that several improvements and modifications can be made by those skilled in the art without departing from the concept of the present invention, which should also be regarded as the scope of the present invention.

## Claims

1. An integrated Software-as-a-service (SaaS) system, **characterized by** comprising:
a management unit (1), wherein a first client logs into the management unit (1) to create and edit order information;
a label unit (2), in signal connection with the management unit (1), wherein the first client creates label information and associates the label information with the order information, the label unit (2) embeds a corresponding label number into the label information according to the order information, and transmits the label information to a second client, so that the second client can manufacture a label according to the label information; and
a matching unit (3), in signal connection with the management unit (1), and used for receiving the order information and comparing the order information with a database (4) to generate a matching result, wherein the first client selects a third client according to the matching result, and the matching unit (3) transmits matching information to the third client; wherein
after the third client receives the matching information, and transmits order receiving information back to the management unit (1), the management unit (1) transmits the order information and the label to the third client according to the order receiving information, so that the third client can manufacture an item according to the order information and correspondingly place the label on the item according to the order information.

2. The integrated Saas system according to claim 1, **characterized in that** the database (4) comprises a plurality of manufacturer information, wherein the plurality of manufacturer information comprises corresponding capital amount, manufacturing capacity, distance and evaluation.

3. The integrated Saas system according to claim 1, **characterized in that** the order information comprises an order number and demand information.

4. The integrated Saas system according to claim 1, **characterized in that** the label unit (2) comprises a product display interface (21) that displays or edits the label information.

5. The integrated Saas system according to claim 1, **characterized in that** the label unit (2) comprises a traceability application interface (22) that displays or edits a query page, wherein the query page provides sales information for querying the item.

6. The integrated Saas system according to claim 1, **characterized in that** the management unit (1) comprises a permission module (11), wherein the first client sets first permission information in the permission module (11), and the management unit (1) restricts the order information according to the first permission information, so as to edit or/and display a corresponding first portion of order information when the third client edits or/and queries the order information.

7. The integrated Saas system according to claim 6, **characterized in that** the first client establishes a group in the management unit (1), and sets second permission information corresponding to the group in the permission module (11), and the management unit (1) restricts the order information according to the second permission information, so as to edit or/and display a corresponding second portion of order information when the group edits or/and queries the order information, wherein the group comprises at least one member.

8. The integrated Saas system according to claim 1, **characterized in that** the first client inputs landing page information and a label type to create the label information.

9. The integrated Saas system according to claim 1, **characterized in that** the label unit (2) comprises a verification module (24), wherein when a fourth client obtains the label information through the label and is linked to the verification module (24), the verification module (24) performs verification according to the label information, and generates and outputs a verification result to the fourth client.

10. The integrated Saas system according to claim 9, **characterized in that** the label unit (2) comprises an anti-counterfeiting application interface (23), wherein the anti-counterfeiting application interface (23) displays or edits a verification page, and the verification page comprises the verification result.

## Patentansprüche

1. Integriertes Software-as-a-Service- (SaaS)-System, **dadurch gekennzeichnet, dass** es umfasst:
eine Verwaltungseinheit (1), wobei sich ein erster Client in die Verwaltungseinheit (1) einloggt, um Auftragsinformationen zu erzeugen und zu bearbeiten;
eine Label-Unit (2) in Signalverbindung mit der Verwaltungseinheit (1), wobei der erste Client Label-Informationen erzeugt und die Label-Informationen mit den Auftragsinformationen verknüpft, die Label-Unit (2) gemäß den Auftragsinformationen eine entsprechende Label-Nummer in die Label-Informationen einbettet und die Label-Informationen an einen zweiten Client überträgt, sodass der zweite Client ein Label gemäß den Label-Informationen herstellen kann; und
eine Abgleichseinheit (3) in Signalverbindung mit der Verwaltungseinheit (1) und zum Empfangen der Auftragsinformationen und Vergleichen der Auftragsinformationen mit einer Datenbank (4) verwendet wird, um ein Abgleichsergebnis zu erzeugen, wobei der erste Client einen dritten Client gemäß dem Abgleichsergebnis auswählt, und die Abgleichseinheit (3) Abgleichsinformationen an den dritten Client überträgt; wobei
die Verwaltungseinheit (1), nachdem der dritte Client die Abgleichsinformationen empfangen hat, und Auftragsempfangsinformationen zurück an die Verwaltungseinheit (1) übertragen hat, die Auftragsinformationen und das Label gemäß den Auftragsempfangsinformationen an den dritten Client überträgt, sodass der dritte Client einen Artikel gemäß den Auftragsinformationen herstellen, und das Label gemäß den Auftragsinformationen entsprechend auf dem Artikel platzieren kann.

2. Integriertes Saas-System nach Anspruch 1, **dadurch gekennzeichnet, dass** die Datenbank (4) eine Vielzahl von Herstellerinformationen umfasst, wobei die Vielzahl von Herstellerinformationen entsprechende(n) Kapitalbetrag, Fertigungskapazität, Entfernung und Bewertung umfassen.

3. Integriertes Saas-System nach Anspruch 1, **dadurch gekennzeichnet, dass** die Auftragsinformationen eine Auftragsnummer und Nachfrageinformationen umfassen.

4. Integriertes Saas-System nach Anspruch 1, **dadurch gekennzeichnet, dass** die Label-Einheit (2) eine Produktanzeigeschnittstelle (21) umfasst, welche die Label-Informationen anzeigt oder bearbeitet.

5. Integriertes Saas-System nach Anspruch 1, **dadurch gekennzeichnet, dass** die Label-Einheit (2) eine Rückverfolgbarkeitsanwendungsschnittstelle (22) umfasst, die eine Abfrageseite anzeigt oder bearbeitet, wobei die Abfrageseite Verkaufsinformationen zum Abfragen des Artikels bereitstellt.

6. Integriertes Saas-System nach Anspruch 1, **dadurch gekennzeichnet, dass** die Verwaltungseinheit (1) ein Berechtigungsmodul (11) umfasst, wobei der erste Client erste Berechtigungsinformationen im Berechtigungsmodul (11) setzt, und die Verwaltungseinheit (1) die Auftragsinformationen gemäß den ersten Berechtigungsinformationen einschränkt, um einen entsprechenden ersten Abschnitt von Auftragsinformationen zu bearbeiten und/oder anzuzeigen, wenn der dritte Client die Auftragsinformationen bearbeitet und/oder abfragt.

7. Integriertes Saas-System nach Anspruch 6, **dadurch gekennzeichnet, dass** der erste Client eine Gruppe in der Verwaltungseinheit (1) erstellt und zweite Berechtigungsinformationen, die der Gruppe entsprechen, im Berechtigungsmodul (11) setzt, und die Verwaltungseinheit (1) die Auftragsinformationen gemäß den zweiten Berechtigungsinformationen einschränkt, um einen entsprechenden zweiten Abschnitt von Auftragsinformationen zu bearbeiten und/oder anzuzeigen, wenn die Gruppe die Auftragsinformationen bearbeitet und/oder abfragt, wobei die Gruppe mindestens ein Mitglied umfasst.

8. Integriertes Saas-System nach Anspruch 1, **dadurch gekennzeichnet, dass** der erste Client Zielseiteninformationen und einen Label-Typ eingibt, um die Label-Informationen zu erzeugen.

9. Integriertes Saas-System nach Anspruch 1, **dadurch gekennzeichnet, dass** die Label-Einheit (2) ein Verifizierungsmodul (24) umfasst, wobei, wenn ein vierter Client die Label-Informationen durch das Label erhält und mit dem Verifizierungsmodul (24) verlinkt ist, das Verifizierungsmodul (24) Verifizieren gemäß den Label-Informationen durchführt und ein Verifizierungsergebnis generiert und an den vierten Client ausgibt.

10. Integriertes Saas-System nach Anspruch 9, **dadurch gekennzeichnet, dass** die Label-Einheit (2) eine Fälschungsschutzanwendungsschnittstelle (23) umfasst, wobei die Fälschungsschutzanwendungsschnittstelle (23) eine Verifizierungsseite anzeigt oder bearbeitet, und die Verifizierungsseite das Verifizierungsergebnis umfasst.

## Revendications

1. Système de logiciel en tant que service (SaaS) intégré, **caractérisé en ce qu'**il comporte :
une unité de gestion (1), dans lequel un premier client se connecte à l'unité de gestion (1) pour créer et modifier des informations de commande ;
une unité d'étiquette (2), en connexion de signal avec l'unité de gestion (1), dans lequel le premier client crée des informations d'étiquette et associe les informations d'étiquette aux informations de commande, l'unité d'étiquette (2) incorpore un numéro d'étiquette correspondant dans les informations d'étiquette selon les informations de commande, et transmet les informations d'étiquette à un deuxième client, de sorte que le deuxième client puisse fabriquer une étiquette selon les informations d'étiquette ; et
une unité de mise en correspondance (3), en connexion de signal avec l'unité de gestion (1), et utilisée pour recevoir les informations de commande et comparer les informations de commande à une base de données (4) pour générer un résultat de mise en correspondance, dans lequel le premier client sélectionne un troisième client selon le résultat de mise en correspondance, et l'unité de mise correspondance (3) transmet des informations de mise en correspondance au troisième client ; dans lequel
après que le troisième client reçoit les informations de mise en correspondance et transmet en retour des informations de réception de commande à l'unité de gestion (1), l'unité de gestion (1) transmet les informations de commande et l'étiquette au troisième client selon les informations de réception de commande, de sorte que le troisième client puisse fabriquer un article selon les informations de commande et apposer en conséquence l'étiquette sur l'article selon les informations de commande.

2. Système SaaS intégré selon la revendication 1, **caractérisé en ce que** la base de données (4) comporte une pluralité d'informations de fabricant, dans lequel la pluralité d'informations de fabricant comporte un montant de capital, une capacité de fabrication, une distance et une évaluation correspondants.

3. Système SaaS intégré selon la revendication 1, **caractérisé en ce que** les informations de commande comportent un numéro de commande et des informations de demande.

4. Système SaaS intégré selon la revendication 1, **caractérisé en ce que** l'unité d'étiquette (2) comporte une interface d'affichage de produit (21) qui affiche ou modifie les informations d'étiquette.

5. Système SaaS intégré selon la revendication 1, **caractérisé en ce que** l'unité d'étiquette (2) comporte une interface d'application de traçabilité (22) qui affiche ou modifie une page de consultation, dans lequel la page de consultation fournit des informations de vente pour la consultation de l'article.

6. Système SaaS intégré selon la revendication 1, **caractérisé en ce que** l'unité de gestion (1) comporte un module d'autorisation (11), dans lequel le premier client définit des premières informations d'autorisation dans le module d'autorisation (11), et l'unité de gestion (1) restreint les informations de commande selon les premières informations d'autorisation, de façon à modifier ou/et afficher une première partie correspondante d'informations de commande lorsque le troisième client modifie ou/et consulte les informations de commande.

7. Système SaaS intégré selon la revendication 6, **caractérisé en ce que** le premier client établit un groupe dans l'unité de gestion (1) et définit des deuxièmes informations d'autorisation correspondant au groupe dans le module d'autorisation (11), et l'unité de gestion (1) restreint les informations de commande selon les deuxièmes informations d'autorisation, de façon à modifier ou/et afficher une deuxième partie correspondante d'informations de commande lorsque le groupe modifie ou/et consulte les informations de commande, dans lequel le groupe comporte au moins un membre.

8. Système SaaS intégré selon la revendication 1, **caractérisé en ce que** le premier client saisit des informations de page de renvoi et un type d'étiquette pour créer les informations d'étiquette.

9. Système SaaS intégré selon la revendication 1, **caractérisé en ce que** l'unité d'étiquette (2) comporte un module de vérification (24), dans lequel, lorsqu'un quatrième client obtient les informations d'étiquette par le biais de l'étiquette et est lié au module de vérification (24), le module de vérification (24) réalise une vérification selon les informations d'étiquette, et génère un résultat de vérification et l'envoie au quatrième client.

10. Système SaaS intégré selon la revendication 9, **caractérisé en ce que** l'unité d'étiquette (2) comporte une interface d'application anti-contrefaçon (23), dans lequel l'interface d'application anti-contrefaçon (23) affiche ou modifie une page de vérification, et la page de vérification comporte le résultat de vérification.
